# EUROPEAN PATENT SPECIFICATION

(11) **EP 1 967 034 B1**
(45) Date of publication and mention of the grant of the patent: **06.07.2011**
(21) Application number: 06847850.2
(22) Date of filing: 20.12.2006
(51) Int. Cl.: H04W 24/10

(54) **Method and apparatus to select a request group for a request report**
Verfahren und Vorrichtung zur Auswahl einer Anforderungsgruppe für eine Anforderungsbericht
Procédé et appareil de sélection d'un group de demandes pour l'étabissement d'une transmission de demandes

(30) Priority: 22.12.2005 US 752973 P; 17.01.2006 US 333792; 12.12.2006 US 609627
(43) Date of publication of application: 10.09.2008
(73) Proprietor: Qualcomm Incorporated, San Diego, CA 92121-1714 (US)
(72) Inventor: DAS, Arnab, Summit, NJ 07901 (US); HUSSAIN, Yunus, Bridgewater, NJ 08807 (US); CELEBI, Samel, Basking Ridge, NJ 07920 (US)
(74) Representative: Heselberger, Johannes
(86) International application number: PCT/US2006/048653
(87) International publication number: WO 2007/075814

(56) References cited:
- EP-A- 1 511 245

## Description

### FIELD OF THE INVENTION

The present invention relates to wireless communications methods and apparatus and, more particularly, to methods and apparatus related to selecting a request group from among a plurality of possible request groups which can be reported in a request report, for example, in an uplink traffic channel request report.

### BACKGROUND

In multiple access wireless communications systems, multiple wireless terminals are typically in competition for limited air link resources. A wireless terminal, operating in a state supporting uplink traffic signaling, typically needs to communicate control information to a base station attachment point. The information may be communicated in the form of one or more control information reports which allow the base station attachment point to characterize the wireless terminal and allocate resources such as uplink transmission resources.

A wireless terminal may support uplink traffic corresponding to a plurality of different types of applications. At different times the wireless terminal may have different traffic channel reporting needs. Accordingly, there is a need for methods and apparatus which would allow for a variety of reporting alternatives. For example, in systems which use a fixed bit size request report format, it would be beneficial if reporting alternatives corresponding to different groupings of traffic could be supported without changing the number of bits used for a report. In addition, assuming methods and apparatus for supporting reporting alternatives were developed, it would also be beneficial if methods and/or apparatus which could be used to select between available reporting alternatives could also be developed and/or supported. Improvements in reporting, and/or selection between reporting alternatives, if available, could facilitate efficient air link resource allocation and/or help to satisfy a wireless terminal's changing traffic needs and/or quality of service requirements.
EP 1511245 (A2) discloses a method and an apparatus for reporting a buffer status of a buffer storing packet data to be transmitted by a user equipment for a scheduling assignment of an uplink packet data service in a mobile communication system supporting the uplink packet data service. A user equipment stores packet data having a priority corresponding to a plurality of priority queues having inherent priorities and relating to at least one service, and transmits buffer status information containing queue identifiers of the priority queues and buffer payload information representing an amount of the packet data stored in the priority queues. Herein, the user equipment inserts the buffer status information into a header part of a protocol data unit for the uplink packet data service, inserts the packet data into a payload part of the protocol data unit, and then transmits the protocol data unit.

### SUMMARY

The invention is defined in the independent claims. Various embodiments are directed to methods and apparatus for supporting a plurality of reporting alternatives, e.g., for a fixed size report. Some features are related to selecting a request group associated with a reporting alternative for a control information request report, e.g., an uplink traffic report which provides information on the amount of data waiting at a communications device to be transmitted. Such a report may be viewed and/or interpreted as a request for uplink transmission resources and is therefore sometimes referred to as an uplink request report.

Various embodiments are directed to reporting transmission backlog information. In some such embodiments, a wireless communications device maintains and updates transmission backlog information corresponding to a plurality of different transmission request groups. Different request groups may correspond to different uplink traffic queues. For a request reporting opportunity, the communications device selects a request group from among the plurality of different transmission request groups as a function of: request group changes in backlog with respect to previously reported requests, the changes taking into consideration base station knowledge, e.g., base station allocation of transmission resources; and request group priority information. A request report is generated conveying backlog information corresponding to the selected request group and, the generated report transmitted over a wireless communications link.

An exemplary method of reporting transmission backlog information in accordance with various embodiments comprises: maintaining backlog information corresponding to a plurality of different transmission request groups; and selecting a request
group from the plurality of different transmission request groups for which backlog information is maintained, wherein said selecting is performed as a function of a request group change in backlog with respect to previously reported backlog information after taking into consideration changes in backlog due to base station allocation of transmission resources.

Various embodiments are also directed to wireless communication devices, e.g., wireless terminals such as mobile nodes. One exemplary wireless communications device is intended for use in a wireless communications system and communicates transmission backlog information to a base station using one of a plurality of supported reporting alternatives. The exemplary wireless communications device includes: a transmission backlog management module for maintaining backlog information corresponding to a plurality of different transmission request groups; and a selection module for selecting a request group from the plurality of different transmission request groups for which back log information is maintained, wherein said selecting is performed as a function of a request group change in backlog with respect to previously reported backlog information after taking into consideration changes in backlog due to base station allocation of transmission resources.

While various embodiments have been discussed in the summary above, it should be appreciated that not necessarily all embodiments include the same features and some of the features described above are not necessary but can be desirable in some embodiments. Numerous additional features, embodiments and benefits are discussed in the detailed description which follows.

### BRIEF DESCRIPTION OF THE FIGURES

Figure 1 is drawing of an exemplary wireless communications system implemented in accordance with various embodiments.

Figure 2 is a drawing of an exemplary wireless terminal, e.g., mobile node, in accordance with various embodiments.

Figure 3 is a drawing of an exemplary base station in accordance with various embodiments.

Figure 4 comprising the combination of Figure 4A, Figure 4B, Figure 4C and Figure 4D is a drawing of a flowchart of an exemplary method of reporting transmission backlog information.

Figure 5 comprising the combination of Figure 5A, Figure 5B, Figure 5C, Figure 5D, Figure 5E and Figure 5F is a drawing of a flowchart of an exemplary method of operating a wireless communications device to report transmission backlog information.

Figure 6 is a drawing of exemplary uplink dedicated control channel (DCCH) segments in an exemplary uplink timing and frequency structure in an exemplary orthogonal frequency division multiplexing (OFDM) multiple access wireless communications system.

Figure 7 includes a table of a set of exemplary Dedicated Control Channel Reports (DCRs) used in an exemplary DCCH reporting structure.

Figure 8 is a drawing illustrating an exemplary dedicated control channel reporting format including the dedicated control channel reports of Figure 9.

Figure 9 is a drawing including a table describing an exemplary format of exemplary 4 bit uplink traffic request report (ULRQST4) and a column describing reporting alternatives.

Figure 10 is a drawing including a table describing another exemplary format of exemplary 4 bit uplink traffic request report (ULRQST4) and a column describing reporting alternatives.

Figure 11 is a drawing describing three exemplary request groups in an exemplary wireless terminal.

### DETATILED DESCRIPTION

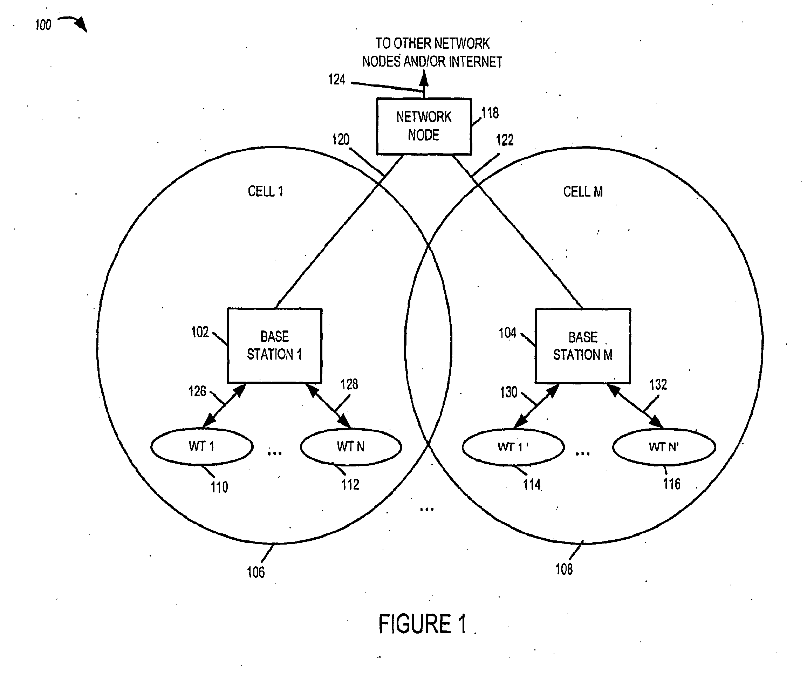

Figure 1 is drawing of an exemplary wireless communications system 100 implemented in accordance with various embodiments. Exemplary wireless communications system 100 is, e.g., an orthogonal frequency division multiplexing (OFDM) multiple access wireless communications system using a dedicated control channel uplink reporting structure including at least some fixed size multi-bit request reports. The fixed bit size request reports can be used to report transmission backlog information, e.g., the number of frames of information waiting to be transmitted with regard to a queue or set of queues. A backlog report may provide information on one or more request groups where different request groups correspond to different queues or sets of queues which can be used to store information to be transmitted.

Exemplary wireless communications system 100 includes a plurality of base stations (base station 1 102, ..., base station M 104). Each base station (102, 104) has a corresponding wireless coverage area (cell 106, cell M 108), respectively. System 100 also includes network node 118 which is coupled to base stations (102, 104) via network links (120, 122), respectively. Network node 118 is also coupled to other network nodes and/or the Internet via link 124. Network links (120, 122, 124) are, e.g., fiber optic links. System 100 may also include cells with multiple sectors and/or cells using multiple carriers.

System 100 also includes a plurality of wireless terminals. At least some of the wireless terminals are mobile nodes which may move throughout the communication system. In Figure 1, wireless terminals (WT 1 110, WT N 112) are located in cell 1 106 and coupled to base station 1 102 via wireless links (126, 128), respectively. In Figure 1, wireless terminals, (WT 1' 114, WT N' 116) are located in cell M 108 and coupled to base station M 104 via wireless links (130, 132), respectively. In accordance with various embodiments, at least some of the wireless terminals use a request report format, e.g., for a fixed bit size uplink traffic channel request report, allowing the wireless terminal to select, for a request report to be transmitted, between reporting alternatives, said reporting alternatives corresponding to at least two different request groups. For example, an exemplary 4 bit uplink traffic channel request report format may include 16 distinct bit patterns, and a first subset of the 16 bit mapping patterns may be associated with mapping request group 1 frame count backlog information, while a second subset of the 16 bit mapping patterns may be associated with mapping request group 2 frame count backlog information, and a third subset of the 16 bit mapping patterns may be associated with mapping request group 3 frame count backlog information said first and second and third subsets being non-overlapping. Continuing with the example, the wireless terminal selects, for a given reporting opportunity, one of the request groups on which to report backlog information. In some embodiments, the selection is performed as a function of: changes in backlog in request groups, whether there is information in a request group, the priority levels associated with the request groups, previous request reports, and/or base station previous allocation.

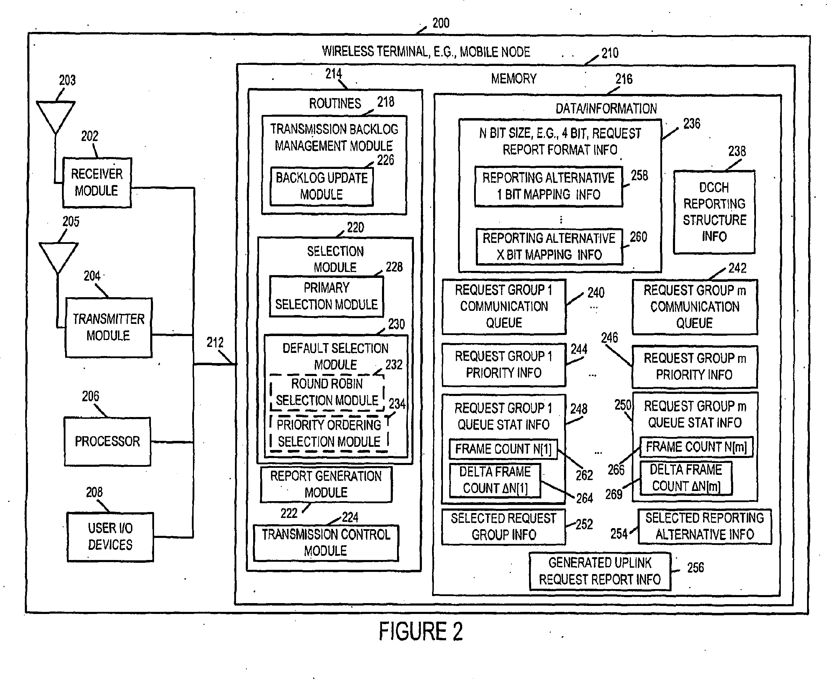

Figure 2 is a drawing of an exemplary wireless terminal 200, e.g., mobile node, in accordance with various embodiments. Exemplary wireless terminal 200 is, e.g., a handheld mobile communications device. Exemplary wireless terminal 200 may be any of the wireless terminals 110, 112, 114, 116 of system 100 of Figure 1.

Exemplary wireless terminal 200 includes a receiver module 202, a transmitter module 204, a processor 206, user I/O devices 208, and a memory 210 coupled together via a bus 212 over which the various elements may interchange data and information. Memory 214 includes routines 214 and data/information 216. The processor 206, e.g., a CPU, executes the routines 214 and the data/information 216 in memory 210 to control the operation of the wireless terminal 200 and implement methods.

Receiver module 202, e.g., an.OFDM receiver, is coupled to receive antenna 203 via which the wireless terminal receives downlink signals from base stations. The received downlink signals include assignment signals conveying assignments for uplink traffic channel segments.

Transmitter module 204, e.g., an OFDM transmitter, is coupled to transmit antenna 205 via which the wireless terminal transmits uplink signals to base stations. The uplink signals include dedicated control channel segment signals and traffic channel segment signals. At least some of the dedicated control channel segment signals convey uplink request reports for traffic channel air link resources, e.g., 1 bit uplink traffic channel request report, 3 bit uplink traffic channel request reports and 4 bit uplink traffic channel request reports. In some embodiments, the same antenna is used for receiver and transmitter.

User I/O devices 208, e.g., microphone, keypad, keyboard, switches, camera, speaker, display, etc., allow a user of wireless terminal 200 to input data/information and access output data/information. User I/O devices 208 also allow a user of wireless terminal 200 to control at least some functions of wireless terminal 200, e.g., initiate or terminate a communications session and/or application.

Routines 214 include a transmission backlog management module 218, a selection module 220, a report generation module 222, and a transmission control module 224. Transmission backlog management module 218 includes a backlog update module 226. Selection module 220 includes a primary selection module 228 and a default selection module 230. Default selection module 230 includes one or more of alternative default selection modules (round robin selection module 232, priority ordering selection module 234).

Transmission backlog management module 218 maintains backlog information corresponding to a plurality of different transmission request groups. Backlog update module 226 updates the maintained backlog information as a function of at least one of received information to be transmitted, dropped information, and transmitted information.

Selection module 220 selects a request group from the plurality of different transmission request groups for which backlog information is maintained, wherein said selecting is performed as a function of a request group change in backlog with respect to previously reported backlog information after taking into consideration changes in backlog due to base station allocation of transmission resources. For example, for each of a plurality of request opportunities for a certain type of n bit uplink traffic channel request report, e.g., a 4 bit uplink traffic channel request report, selection module 220 performs a selection identifying a request group on which backlog information is to be conveyed for that reporting opportunity.

In some embodiments, primary selection module 228, selects, when at least one of the transmission request groups has a non-zero change in backlog with respect to the last previously reported request report conveying that particular request group's backlog information after taking into consideration changes in backlog due to base station allocation of transmission resources, the request group having the highest priority from among the request groups having a non-zero change in backlog with respect to the last previously reported request report conveying that particular request groups backlog information after taking into consideration changes in backlog due to base station allocation of transmission resources.

In some embodiments, primary selection module 228, selects, when at least one of the transmission request groups has a positive change in backlog with respect to the.last previously reported request report conveying that particular request group's backlog information after taking into consideration changes in backlog due to base station allocation of transmission resources, the request group having the highest priority from among the request groups having a positive change in backlog with respect to the last previously reported request report conveying that particular request groups backlog information after taking into consideration changes in backlog due to base station allocation of transmission resources.

In some embodiments, primary selection module 228, selects, when at least one of the transmission request groups has a positive backlog and a non-negative change in backlog with respect to the last previously reported request report conveying that particular request group's backlog information after taking into consideration changes in backlog due to base station allocation of transmission resources, the request group having the highest priority from among the request groups having a positive backlog and a non-negative change in backlog with respect to the last previously reported request report conveying that particular request groups backlog information after taking into consideration changes in backlog due to base station allocation of transmission resources.

In some embodiments, default selection module 230 selects a request group from among the plurality of request groups when none of the individual request groups have a non-zero change in backlog with respect to the last previously reported request report conveying that particular individual request group's backlog information after taking into consideration changes in backlog due to base station allocation of transmission resources.

In some embodiments, default selection module 230 selects a request group from among the plurality of request groups when none of the individual request groups have a positive change in backlog with respect to the last previously reported request report conveying that particular individual request group's backlog information after taking into consideration changes in backlog due to base station allocation of transmission resources.

In some embodiments, default selection module 230 selects a request group from among the plurality of request groups when none of the individual request groups have a positive backlog and a non-negative change in backlog with respect to the last previously reported request report conveying that particular individual request group's backlog information after taking into consideration changes in backlog due to base station allocation of transmission resources.

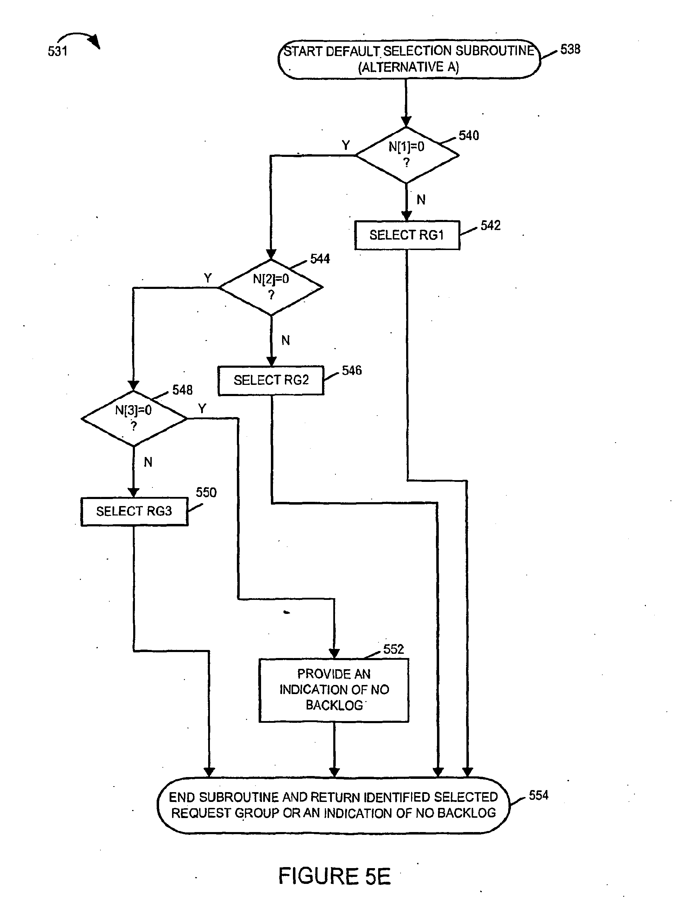

Round robin selection module 232 performs the selection for the default selection module 230 as a function of a round robin selection process. Flowchart 533 of Figure 5E represents an example of a round robin selection process. Priority ordering selection module 234 performs the selection for the default selection module 230 as a function of a priority ordered selection process. Flowchart 531 of Figure 5E represents an example of a priority ordered selection process.

In some embodiments, the default selection module 230, at times, determines that it should be reported that there is no backlog in any of the request groups.

Report generation module 222 generates an n-bit size request report in accordance with N bit size request report format information 236 and the reporting alternative indicated by information 254 corresponding to the selected request group indicated by information 252.

Transmitter module 204 transmits the generated n-bit size request report over a wireless communications link, e.g., to a base station serving as the wireless terminal's current point of network attachment. Transmission control module 224 controls the operation of transmitter module 204 to control the transmission of the generated n-bit size request report over a wireless communications link.

Data/information 216 includes. N bit size, e.g., 4 bit size, request report format information 236, dedicated control channel reporting structure information 238, a plurality of request group communication queues (request group 1 communication queue 240, ..., request group m communication queue 242), a plurality of request group priority information (request group 1 priority information 244, ..., request group m priority information 246), a plurality of request group queue statistics information (request group 1 queue stats information 248, ..., request group m queue stats information 250), selected request, group information 252, selected reporting alternative information 254, and generated uplink request report information 256. N bit size report format information 236 includes a plurality of sets of reporting alternative bit mapping information (reporting alternative 1 bit mapping information 258, ..., reporting alternative X bit mapping information 260). Request group 1 queue statistics information 248 includes frame counts N[1] 262, and delta frame counts ΔN[1] 264. Request group m queue statistics information 250 includes frame counts N[m] 266, and delta frame counts ΔN[m] 269.

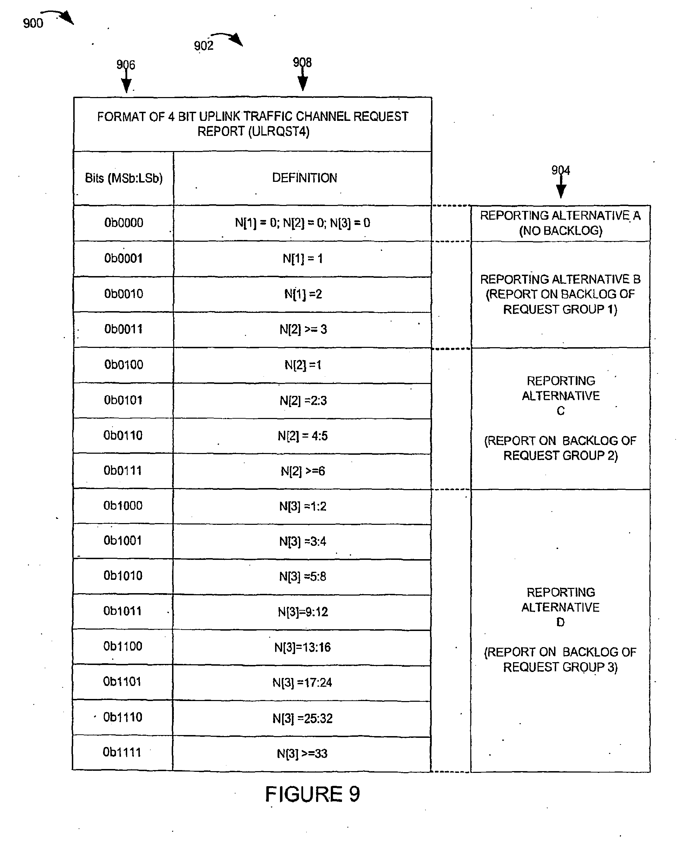

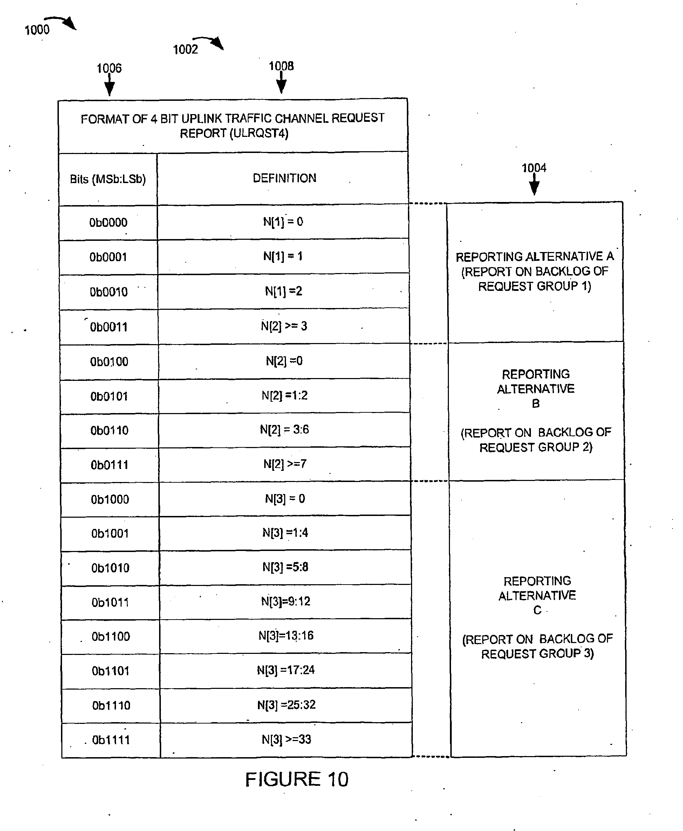

Figure 9 represents one example of exemplary N bit size request report format information 236 used in some embodiments. Figure 10 represents another example of exemplary N bit size request report format information 236 used in some embodiments. In various embodiments, the n-bit size request report format information supports a plurality of reporting alternatives, different reporting alternatives corresponding to different request groups.

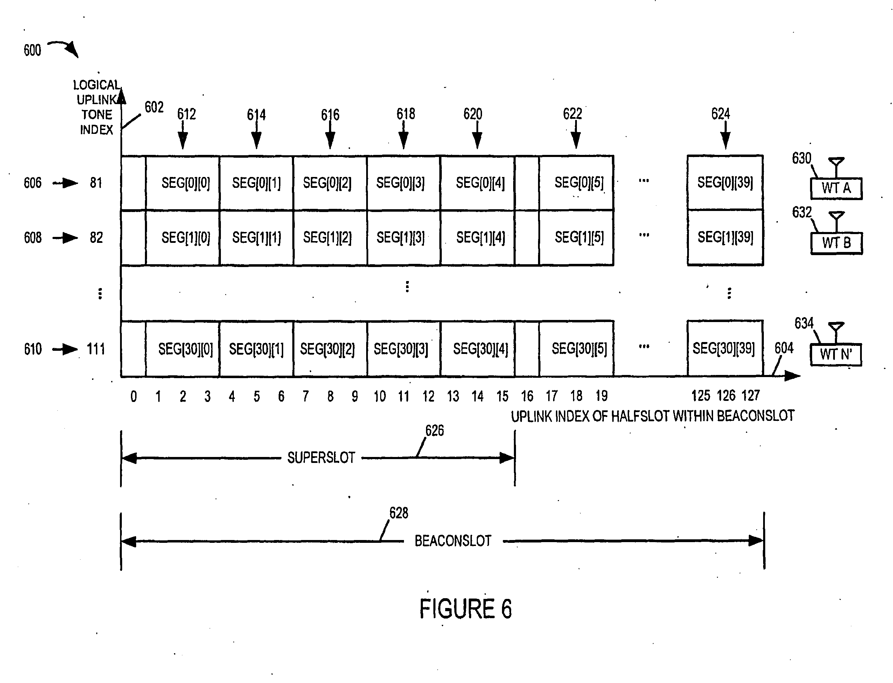

Dedicated control channel (DCCH) reporting structure information 238 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 236. Figures 6, 7, and 8 include some exemplary DCCH reporting structure information.

Request groups communication queues (request group 1 communication queue 240, ... request group m communication queue 242) are a plurality of communication queues for storing data to be transmitted, where each request group corresponds to one communication queue. In some embodiments, at least some of the different request groups correspond to a set of communication queues. Request group priority information (request group 1 priority information 244, ..., request group m priority information 246) are stored request group priority information associated with the different request groups. Selection of a reporting alternative is performed, in some embodiments, as a function of request group priority information. In various embodiments the request group priorities are predetermined. Request groups queue statistics information (request group 1 queue stats info 248, ..., request group m queue stats info 250) includes frame counts of backlog, e.g., MAC frame counts of backlog, (N[1] 262, ..., N[m] 266), respectively corresponding to (request group 1 communication queue 240, ..., request group m communication queue 242), respectively. Request groups queue statistics information (request group 1 queue stats info 248, ..., request group m queue stats info 250) includes delta frame counts of backlog, e.g., delta MAC frame counts of backlog, (ΔN[1] 264,..., ΔN[m] 269), respectively corresponding to (request group 1 communication queue 240, ..., request group m communication queue 242), respectively. The delta frame count information for a request group, e.g., ΔN[1] 264 for request group 1, is calculated with respect to the last previously transmitted backlog information with respect to that request group after taking into consideration changes due to base station knowledge, e.g., base station allocation of transmission resources. Selection module 220, uses the queue stats info (248, ..., 250) in determining a selected request group.

Selected request group information 252, an output of module 220 and an input to module 222, is, e.g., an identifier identifying which of the m request groups has been selected by selection module 220. In some embodiments, selected request group information, at time, indicates that none of the request groups have backlog. Selected reporting alternative information 254, which corresponds to the selected request group information 252 identifies one of the X reporting alternatives in accordance with request report format information 236. Generated uplink request report information 256 is an output of report generation module 222. For example, if the uplink request report is a four bit uplink request report, the report is one of 16 different bit patterns.

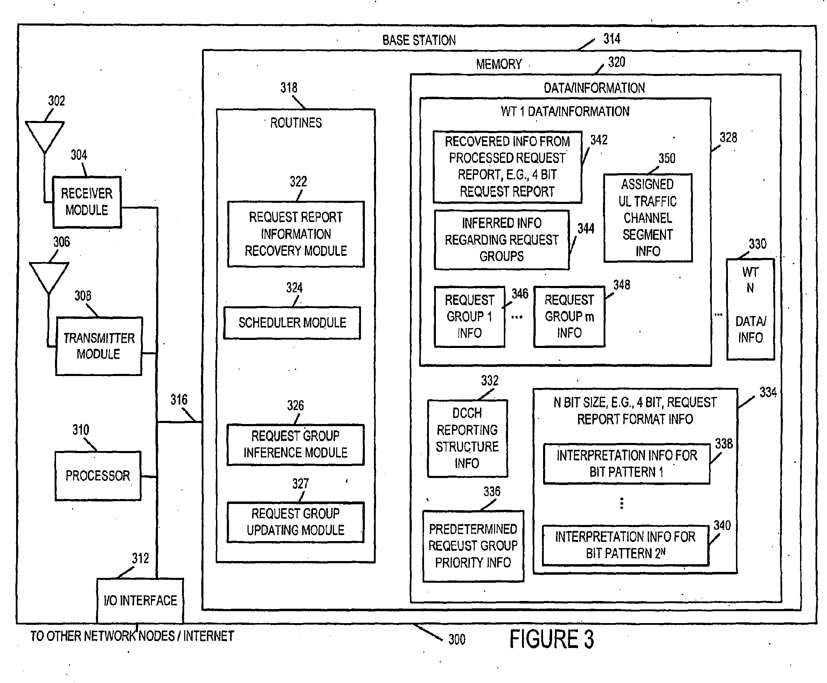

Figure 3 is a drawing of an exemplary base station 300 in accordance with various embodiments. Exemplary base station 300 may be any of the exemplary base stations (BS 1 102, ..., BS M 104) of system 100 of Figure 1. Base station 300 includes a receiver module 304, a transmitter module 308, a processor 310, an I/O interface 312, and a memory 314 coupled together via a bus 316 over which the various elements may interchange data and information. Memory 314 includes routines 318 and data/information 320. The processor 310, e.g., a CPU, executes the routines 318 and uses the data/information 320 in memory 314 to control the operation of the base station 300 and implement methods.

Receiver module 304, e.g., an OFDM receiver, is coupled to receive antenna 302 via which the base station 300 receives uplink signals from wireless terminals, said received uplink signals including dedicated control channel segment signals, at least some of the dedicated control channel segment signal conveying traffic channel request reports. Received uplink signals also include traffic channel segment signals. Transmitter module 308, e.g., an OFDM transmitter, is coupled to transmit antenna 306 via which the base station transmits downlink signals to wireless terminals, said downlink signals including assignment signals conveying assignments for uplink traffic channel segments. I/O interface 312 couples the base station to other network node, e.g., other base stations and/or the Internet. Thus I/O interface 312, by coupling the base station 300 to a backhaul network allows a wireless terminal using an attachment point of base station 300 to participate in a communications session with a peer node, e.g., another wireless terminal, using a different base station as its point of network attachment.

Routines 318 include a request report information recovery module 322, a scheduler module 324, a request group inference module 326 and a request group updating module 327. Request report information recovery module 322 uses data/information 320 including N bit size request report format information 334 to obtain recovered information from a received request report, e.g., a 4 bit request report for traffic channel resources communicated in an uplink dedicated control channel segment. For example corresponding to WT 1, the recovered information includes recovered information from processed request report 342. The information bits of the request report may be one of a plurality, e.g., 16, of different patterns, and the particular bit pattern is interpreted to mean that one request group or a set of request groups has a certain number of frames in backlog or has a number of frames within a range in its backlog. For example consider an example where the request report format corresponds to that of Figure 10, bit pattern = 0010 may signify that request group 1 has 2 frames in its backlog waiting to be transmitted.

Scheduler module 324 schedules uplink and downlink traffic channel segments to wireless terminals. For example, scheduler module 324 schedules uplink traffic channel segments in response to received requests communicated in fixed bit size uplink traffic channel request reports, e.g., ULRQST4 reports, from wireless terminals in an On-state of operation using the base station 300 as a current point of network attachment. Assigned uplink traffic channel segment information 350 corresponds to scheduler 324 assignments for WT 1, e.g., information identifying particular indexed uplink traffic channel segments assigned to WT 1.

Request group inference module 326 performs inferences about request groups not directly reported in the received request report. For example, consider that the predetermined request group priority information 336 identifies that request group 1 has a higher predetermined priority than request group 2 or request group 3, and the reporting rules are such that a wireless terminal reports the backlog of the highest priority group with a positive delta backlog after taking into consideration base station knowledge, e.g., base station previous allocation of uplink segments. If in such a situation, the base station received a report which conveyed information about request group 2, the base station could infer that request group 1 does not have a positive delta backlog.

Request group updating module 327 uses the recovered information, e.g., info 342, obtained from recovery module 322 and the inferred information, e.g., info 344, obtained from inference module 326 to update the set of request group information corresponding to the wireless terminal, e.g., (request group 1 information 346, ..., request group m information 348). For example, request group updating module 327 loads new request group frame counts, modifies request frame counts, and/or clears request group counts with regard to one or more of request group information sets, e.g., (request group 1 information 346, ..., request group m information 348).

Data/information 320 includes a plurality of sets of wireless terminal data/information (WT 1 data/information 328, ..., WT N data/information 330), dedicated control channel reporting structure information 332, N bit size request report format information 334, and predetermined request group priority information 336. WT 1 data/information 328 includes recovered information from processed request report 342, inferred information regarding request groups 344, a plurality of sets of request group information (request group 1 information 346, ..., request group m information 348), and assigned uplink traffic channel segment information 350.

N bit size, e.g., 4 bit size, report format information 334.includes interpretation information for a plurality of bit patterns (interpretation information for bit pattern 1 338, ..., interpretation information for bit pattern 2^{N} 340). For example in one exemplary embodiment; where N = 4 there are 16 distinct bit patterns (0000, 0001, ..., 1111) where each bit pattern has a different interpretation of the information being conveyed in the report.

Predetermined request group priority information 336 includes information associating different uplink traffic request groups with different predetermined priorities. In some embodiments, different wireless terminals have different priorities orderings associated with the request groups being used.

Dedicated control channel (DCCH) reporting structure information 332 includes information identifying DCCH logical channel tones, DCCH segments, mapping of different types of reports to segments, and associated timing in a recurring reporting structure. The different types of reports in the DCCH reporting structure include a request report type in accordance with the N bit size request report format information 334.

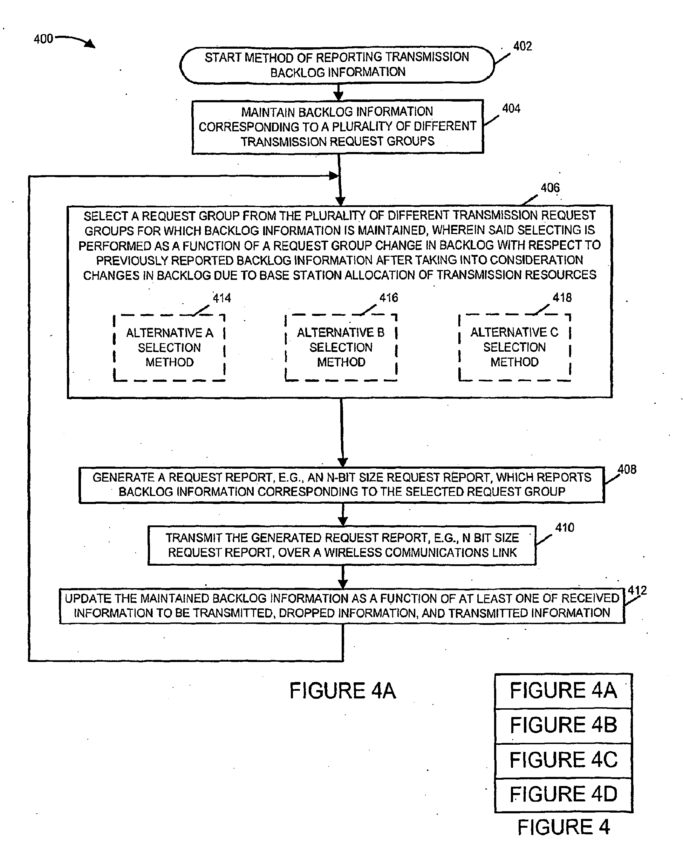

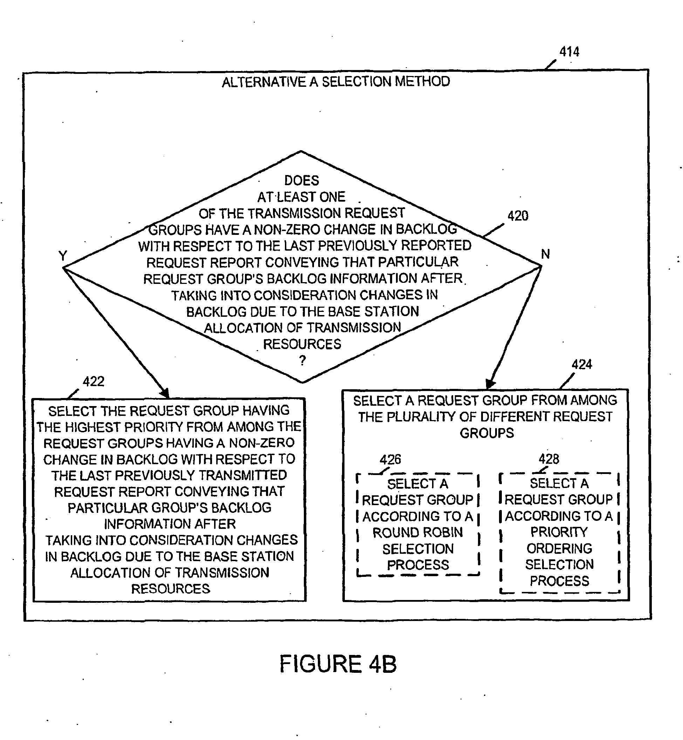

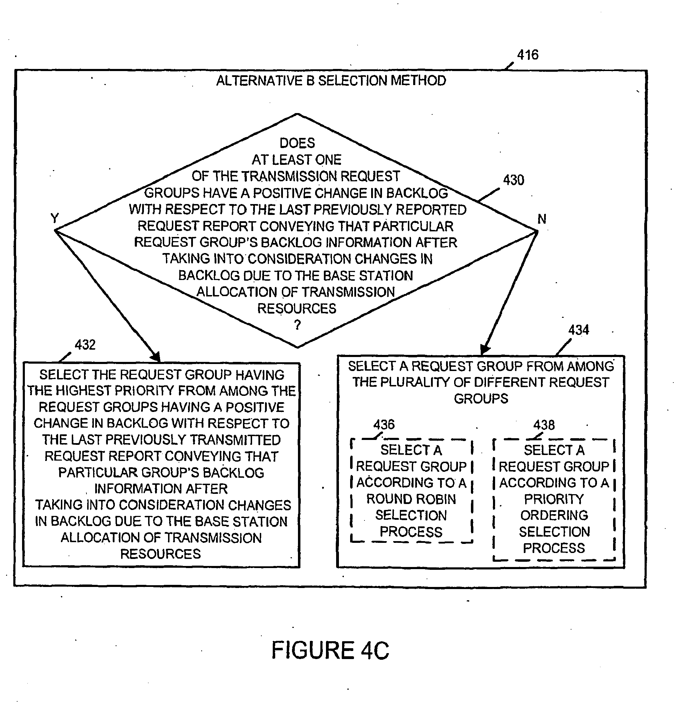

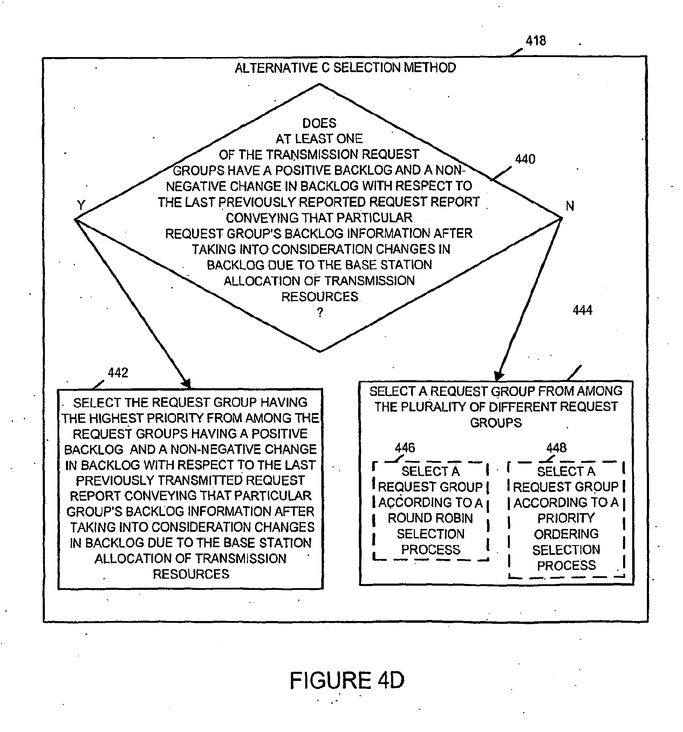

Figure 4 comprising the combination of Figure 4A, Figure 4B, Figure 4C and Figure 4D is a drawing of a flowchart 400 of an exemplary method of reporting transmission backlog information that may be implemented by a wireless communications device. For example, an exemplary wireless terminal such as a mobile node in an exemplary OFDM multiple access wireless communications system, may implement the method of flowchart 400 to report backlog information about different transmission request requests for uplink traffic to a base station. In some embodiments, each request group corresponds to a request group queue used to store information to be transmitted. The exemplary method is started in step 402, e.g., where the communications device is powered on and initialized. Operation proceeds from start step 402 to step 404.

In step 404, the communications device maintains backlog information corresponding to a plurality of different transmission request groups. Backlog information includes, e.g., counts of frames, e.g., counts of MAC frames, waiting to be transmitted corresponding to a request group. Operation proceeds from step 404 to step 406.

In step 406, the communications device selects a request group from the plurality of different transmission request groups for which backlog information is maintained, wherein said selecting is performed as a function of a request group change in backlog with respect to previously reported backlog information after taking into consideration changes in backlog due to base station allocation of transmission resources. In step 406 three exemplary alternative selection methods are included (alternative A selection method 414, alternative B selection method 416, alternative C selection method 418).

In alternative A selection method 414 (See Figure 4B), the communications device determines in sub-step 420 if at least one of the transmission request groups have a non-zero change in backlog with respect to the last previously reported request report conveying that particular request group's backlog information after taking into consideration changes in backlog due to the base station allocation of transmission resources. If it is determined in sub-step 420 that at least one of the request groups has a non-zero change operation proceeds from sub-step 420 to sub-step 422; otherwise, operation proceeds from sub-step 420 to sub-step 424.

In sub-step 422, the communications device selects the request group having the highest priority from among the request groups having a non-zero change in backlog with respect to the last previously transmitted request report conveying that particular request group's backlog information after taking into consideration changes in backlog due to the base station allocation of transmission resources. In sub-step 424, the communication device selects a request group from among the plurality of different request groups. Sub-step 424 includes two alternative sub-steps, sub-step 426 and sub-step 428. In sub-step 426, the communications device selects a request group according to a round robin selection process. In sub-step 428, the communications device selects a request group according to a priority ordering selection process.

In alternative B selection method 416 (See Figure 4C), the communications device determines in sub-step 430 if at least one of the transmission request groups have a positive change in backlog with respect to the last previously reported request report conveying that particular request group's backlog information after taking into consideration changes in backlog due to the base station allocation of transmission resources. If it is determined in sub-step 430 that at least one of the request groups has a positive change operation proceeds from sub-step 430 to sub-step 432; otherwise, operation proceeds from sub-step 430 to sub-step 434.

In sub-step 432, the communications device selects the request group having the highest priority from among the request groups having a positive change in backlog with respect to the last previously transmitted request report conveying that particular request group's backlog information after taking into consideration changes in backlog due to the base station allocation of transmission resources. In sub-step 434, the communication device selects a request group from among the plurality of different request groups. Sub-step 434 includes two alternative sub-steps, sub-step 436 and sub-step 438. In sub-step 436, the communications device selects a request group according to a round robin selection process. In sub-step 438, the communications device selects a request group according to a priority ordering selection process.

In alternative C selection method 418 (See Figure 4D), the communications device determines in sub-step 440 if at least one of the transmission request groups have a positive backlog and a non-negative change in backlog with respect to the last previously reported request report conveying that particular request group's backlog information after taking into consideration changes in backlog due to the base station allocation of transmission resources. If it is determined in sub-step 440 that at least one of the request groups has a positive backlog and a non-negative change in backlog operation proceeds from sub-step 440 to sub-step 442; otherwise, operation proceeds from sub-step 440 to sub-step 434.

In sub-step 442, the communications device selects the request group having the highest priority from among the request groups having a positive backlog and a non-negative change in backlog with respect to the last previously transmitted request report conveying that particular request group's backlog information after taking into consideration changes in backlog due to the base station allocation of transmission resources. In sub-step 444, the communication device selects a request group from among the plurality of different request groups. Sub-step 444 includes two alternative sub-steps, sub-step 446 and sub-step 448. In sub-step 446, the communications device selects a request group according to a round robin selection process. In sub-step 448, the communications device selects a request group according to a priority ordering selection process.

Returning to Figure 4A, operation proceeds from step 406 to step 408. In step 408, the communications device generates a request report, e.g., an N bit size uplink request report, which reports backlog information corresponding to the selected request group. In some embodiments, the selected request group corresponds to one of a plurality of supported reporting alternatives of an n bit size request report format, different reporting alternatives corresponding to different request groups, and the generated n-bit size request report is in accordance with the n-bit size request report format and said reporting alternative corresponding to the selected request group.

Operation proceeds from step 408 to step 410. In step 410, the communications device transmits the generated request report, e.g., N bit size request report, over a wireless communications link.

Operation proceeds from step 410 to step 412. In step 412, the communications device updates the maintained backlog information as a function of at least one of received information to be transmitted, dropped information, and transmitted information. Operation proceeds from step 412 to step 406, where the communication device performs another request group selection, e.g., for another request report to be transmitted.

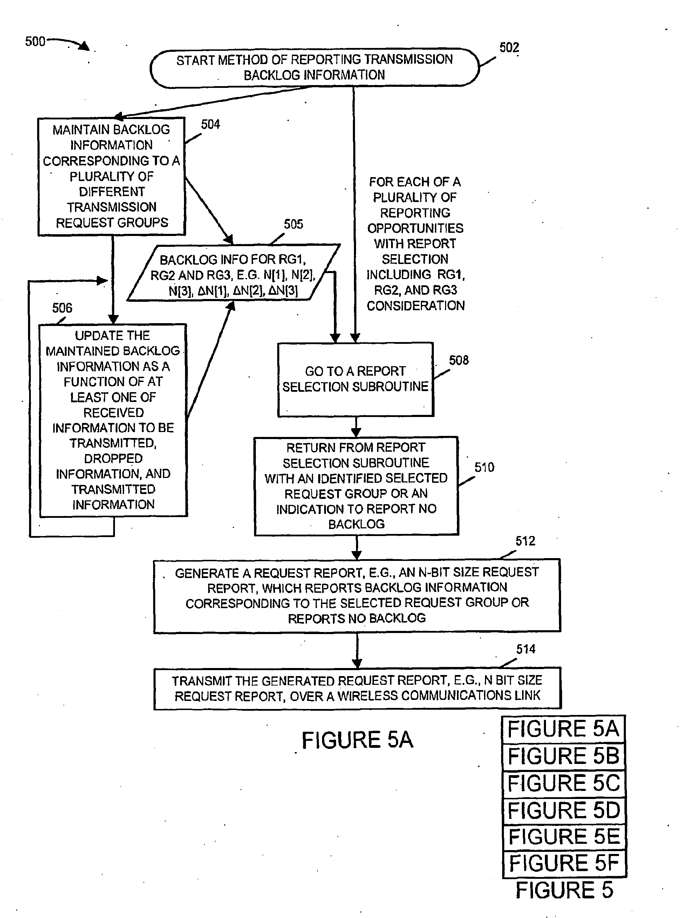

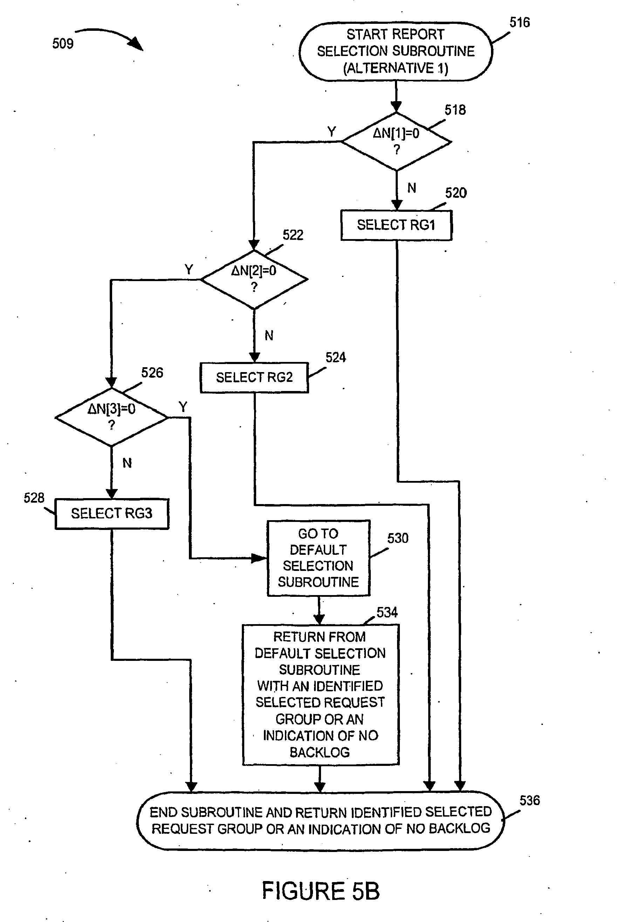

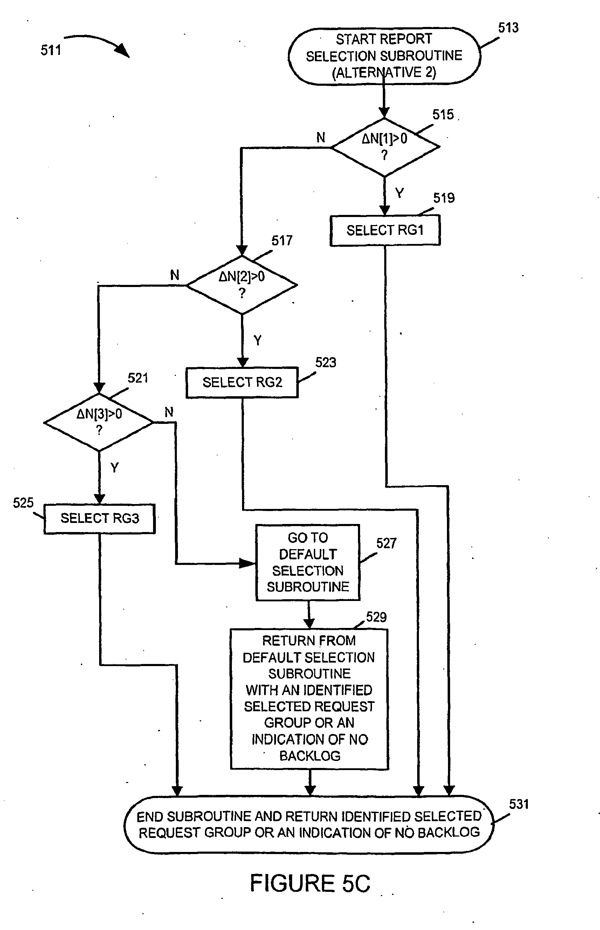

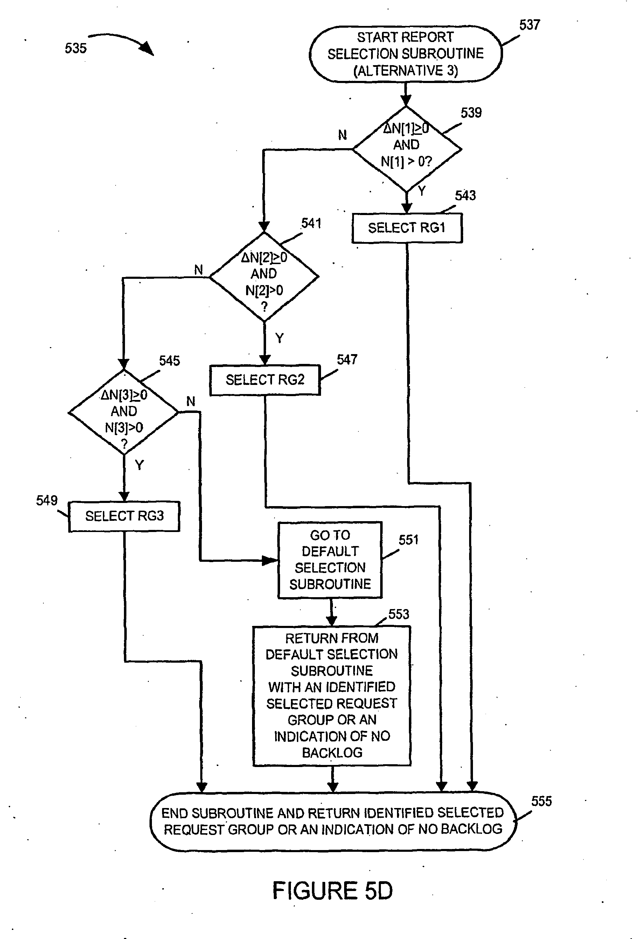

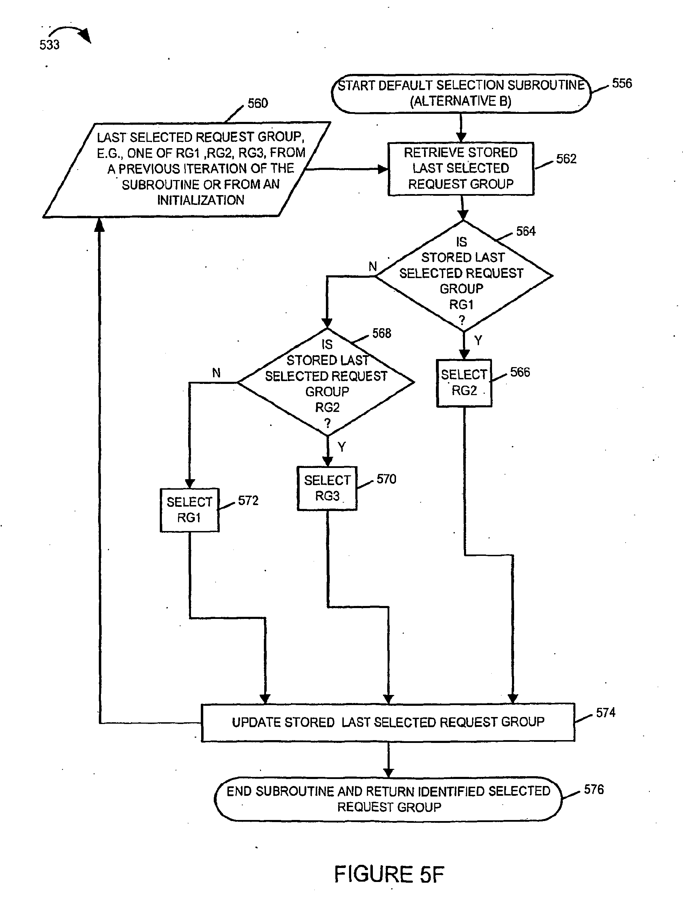

Figure 5 comprising the combination of Figure 5A, Figure 5B, Figure 5C, Figure 5D, Figure 5E and Figure 5F is a drawing of a flowchart 500 of an exemplary method of operating a wireless communications device to report transmission backlog information. For example, an exemplary wireless terminal such as a mobile node in an exemplary OFDM multiple access wireless communications system, may implement the method of flowchart 500 to report backlog information about three different transmission request groups for uplink traffic to a base station. Operation starts in step 502 where the communications device is powered on and initialized. Operation proceeds from start step 502 to step 504 and step 508.

In step 508, the communications device maintains backlog information corresponding to a plurality of different transmission request groups. In this example, the wireless terminal maintains backlog information 505 corresponding to request group 1 (RG1), request group 2 (RG2), and request group 3 (RG3). Each request group (RG1, RG2, RG3) corresponds to a request group queue used to store information to be transmitted, e.g., uplink traffic to be transmitted. Backlog information 505 includes, e.g., frames counts of backlog to be transmitted, e.g., MAC frames of backlog, corresponding to the request groups where N[1] is the frame count for RG1, N[2] is the frame count for RG2, and N[3] is the frame count for RG3. Backlog information 505 also includes delta information corresponding to the request groups: ΔN[1] corresponding to RG1, ΔN[2] corresponding to RG2, and ΔN[3] corresponding to RG3, where a delta indicates a change with respect to the last previously reported request report conveying that particular request group's backlog information after taking into consideration changes in backlog expected to be known to the base station, e.g., changes in backlog due to base station allocation of transmission resources.

Operation proceeds from step 504 to step 506. In step 506, the communications device updates the maintained backlog information 505 as a function of at least one of received information to be transmitted, dropped information, and transmitted information. Step 506 is performed on an ongoing basis.

Operation proceeds from start step 502 to step 508, for each of a plurality of reporting opportunities which report selection including request group 1, request group 2, and request group 3 consideration. For example, each opportunity, in some embodiments, is a multi-bit, e.g., 4 bit, uplink traffic channel request report opportunity in a dedicated control channel reporting structure. Step 508 uses backlog information 505 as input. Step 508 directs operation to a report selection subroutine. Drawing 509 of Figure 5B is a flowchart of an exemplary report selection subroutine, alternative 1 report selection subroutine. Drawing 511 of Figure 5C is a flowchart of another exemplary report selection subroutine, alternative 2 report selection subroutine. Drawing 535 of Figure 5D is a flowchart of still another exemplary report selection subroutine, alternative 3 report selection subroutine.

Exemplary alternative 1 report selection subroutine of Figure 5B will now be described. Operation of alternative 1 report selection subroutine starts in step 516, e.g., where the subroutine receives backlog information 505 including delta count information corresponding to the request groups. Operation proceeds from start step 516 to step 518.

In step 518, the communications device determines whether the delta count associated with request group 1 is equal to zero. If it is determined in step 518 that ΔN[1] is not equal to zero, then operation proceeds to step 520 where the communication device selects RG 1 as the selected request group; otherwise operation proceeds from step 518 to step 522.

In step 522, the communications device determines whether the delta count associated with request group 2 is equal to zero. If it is determined in step 522 that ΔN[2] is not equal to zero; then operation proceeds to step 524 where the communication device selects RG2 as the selected request group; otherwise operation proceeds from step 522 to step 526.

In step 526, the communications device determines whether the delta count associated with request group 3 is equal to zero. If it is determined in step 526 that ΔN[3] is not equal to zero, then operation proceeds to step 528 where the communication device selects RG3 as the selected request group; otherwise operation proceeds from step 526 to step 530.

In step 530, operation is directed to a default selection subroutine. Flowchart 531 of Figure 5E is a flowchart of a first alternative default selection subroutine using a priority ordered selection process. Flowchart 533 of Figure 5D is a flowchart of a second alternative default selection subroutine using a round robin selection process.

Operation proceeds to step 534, where operation returns from a default selection subroutine, e.g., from step 554 or step 576, with an identified selected request group or an indication of no backlog. Operation proceeds from one of steps 520, 524, 534, and 528 to step 536. In step 536, the report selection subroutine ends and the subroutine returns an identified selected request group or an indication of no backlog.

Exemplary alternative 2 report selection subroutine of Figure 5C will now be described. Operation of alternative 2 report selection subroutine starts in step 513, e.g., where the subroutine receives backlog information 505 including delta count information corresponding to the request groups. Operation proceeds from start step 513 to step 515.

In step 515, the communications device determines whether the delta count associated with request group 1 is greater than zero. Ifit is determined in step 515. that ΔN[1] is greater than zero, then operation proceeds to step 519 where the communication device selects RG1 as the selected request group; otherwise operation proceeds from step 515 to step 517.

In step 517, the communications device determines whether the delta count associated with request group 2 is greater than zero. If it is determined in step 517 that ΔN[2] is greater than zero, then operation proceeds to step 523 where the communication device selects RG2 as the selected request group; otherwise operation proceeds from step 517 to step 521.

In step 521, the communications device determines whether the delta count associated with request group 3 is greater than zero. If it is determined in step 521 that ΔN[3] is greater than zero, then operation proceeds to step 525 where the communication device selects RG3 as the selected request group; otherwise operation proceeds from step 521 to step 527.

In step 527, operation is directed to a default selection subroutine. Flowchart 531 of Figure 5E is a flowchart of a first alternative default selection subroutine using a priority ordered selection process. Flowchart 533 of Figure 5F is a flowchart of a second alternative default selection subroutine using a round robin selection process.

Operation proceeds to step 529, where operation returns from a default selection subroutine, e.g., from step 554 or step 576, with an identified selected request group or an indication of no backlog. Operation proceeds from one of steps 519, 523, 525, and 529 to step 531. In step 531, the report selection subroutine ends and the subroutine returns an identified selected request group or an indication of no backlog.

Exemplary alternative 3 report selection subroutine of Figure 5D will now be described. Operation of alternative 3 report selection subroutine starts in step 537, e.g., where the subroutine receives backlog information 505 including count information and delta count information corresponding to the request groups. Operation proceeds from start step 537 to step 539.

In step 539, the communications device determines whether request group 1 has a positive backlog and whether the delta count associated with request group 1 is greater than or equal to zero. If it is determined in step 539 that N[1] is greater than 0 and ΔN[1] is greater than or equal to zero, then operation proceeds to step 543 where the communication device selects RG1 as the selected request group; otherwise operation proceeds from step 539 to step 541.

In step 541, the communications device determines whether request group 2 has a positive backlog and whether the delta count associated with request group 2 is greater than or equal to zero. If it is determined in step 541 that N[2] is greater than 0 and ΔN[2] is greater than or equal to zero, then operation proceeds to step 547 where the communication device selects RG2 as the selected request group; otherwise operation proceeds from step 541 to step 545.

In step 545, the communications device determines whether request group 3 has a positive backlog and whether the delta count associated with request group 3 is greater than or equal to zero. If it is determined in step 545 that N[3] is greater than 0 and ΔN[3] is greater than or equal to zero, then operation proceeds to step 549 where the communication device selects RG3 as the selected request group; otherwise operation proceeds from step 545 to step 551.

In step 551, operation is directed to a default selection subroutine: Flowchart 531 of Figure 5E is a flowchart of a first alternative default selection subroutine using a priority ordered selection process. Flowchart 533 of Figure 5F is a flowchart of a second alternative default selection subroutine using a round robin selection process.

Operation proceeds to step 553, where operation returns from a default selection subroutine, e.g., from step 554 or step 576, with an identified selected request group or an indication of no backlog. Operation proceeds from one of steps 543, 547, 549, and 553 to step 555. In step 555, the report selection subroutine ends and the subroutine returns an identified selected request group or an indication of no backlog.

The exemplary method of default selection subroutine (alternative A) of flowchart 531 of Figure 5E will now be described. Operation of the default selection subroutine starts in step 538 and proceeds to step 540. In step 540, the communication device determines whether the frame count corresponding to request group 1 is equal to zero. If it is determined that N[1] = 0 operation proceeds from step 540 to step 544; otherwise operation proceeds from step 540 to step 542, where the communication device selects RG1 as the selected request group.

In step 544, the communication device determines whether the frame count corresponding to request group 2 is equal to zero. If it is determined that N[2] = 0 operation proceeds from step 544 to step 548; otherwise operation proceeds from step 544 to step 546, where the communication device selects RG2 as the selected request group.

In step 548, the communication device determines whether the frame count corresponding to request group 3 is equal to zero. If it is determined that N[3] = 0 operation proceeds from step 548 to step 552; otherwise operation proceeds from step 548 to step 550, where the communication device selects RG3 as the selected request group. In step 552, the subroutine provides an indication of no backlog corresponding to RG1, RG2 and RG3.

Operation proceeds from one of steps 542, 546, 550 and 552 to step 554. In step 554, the subroutine ends and returns an identified selected request group or an indication of no backlog.

The exemplary method of default selection subroutine (alternative B) of flowchart 533 of Figure 5F will now be described. Operation of the default selection subroutine starts in step 556 and proceeds to step 562. In step 562, the subroutine retrieves the stored last selected request group from stored information 560, e.g., the last selected request group selected by this subroutine on a previous iteration of the subroutine or an initialization value if this happens to be a first iteration of the subroutine.

Operation proceeds from step 562 to step 564. In step 564, it its determined wether the stored last selected request group was RG 1. If it is determined in step 564, that the stored last selected request group is RG1, then operation proceeds to step 566, where the subroutine selects RG2 as the selected request group; otherwise operation proceeds to step 568.

In step 568, it is determined whether the stored last selected request group was RG2. If it is determined in step 564, that the stored last selected request group is RG2, then operation proceeds to step 570, where the subroutine selects RG3 as the selected request group; otherwise operation proceeds to step 572. In step 572, the subroutine selects RG1 as the selected request group, since by default RG3 was the stored last selected request group.

Operation proceeds from one of steps 566, 570, and 572 to step 574. In step 574, the subroutine updates the stored last selected request group in information 560 based on the
selection of the one of steps 566, 570 and 572. Operation proceeds from step 574 to step 576, where the subroutine ends and the subroutine returns the identified selected request group.

Returning to Figure 5A, operation proceeds to step 510, where operation returns from the report selection subroutine, e.g., from one of step 536, step 531 and 555, with an identified selected request group or an indication to report no backlog. In some embodiments, the selected request group corresponds to one of a plurality of supported reporting alternatives of an n-bit size request report, different reporting alternatives corresponding to different request groups. For example, the n-bit size report may be a 4 bit report with 16 alternative possible 4 bit bit patterns, and a first reporting alternative associated with reporting request group 1 backlog may include a first subset of those 16 bit patterns, a second reporting alternative associated with reporting request group 2 backlog may include a second subset of those 16 bit patterns, and a third reporting alternative associated with reporting request group 3 backlog may include a third subset of those 16 bit patterns, where said first, second, and third subsets are non-overlapping.

Then, in step 512, the communications device generates a request report, e.g., an N-bit size request report, which reports backlog information corresponding to the selected request group or reports no backlog. In some embodiments, the generated n-bit size request report is in accordance with the n-bit size request report format and said reporting alternative corresponding to the selected request group.

Operation proceeds from step 512 to step 514. In step 514, the communication device transmits the generated request report, e.g., an N bit size request report, over a wireless communications link.

In some embodiments, the number of request groups under consideration for selection is two. In some embodiments, the number of request groups under consideration for selection is a number greater than three, e.g., four, five six, seven, eight, or nine.

Figure 6 is a drawing 600 of exemplary uplink dedicated control channel (DCCH) segments in an exemplary uplink timing and frequency structure in an exemplary orthogonal frequency division multiplexing (OFDM) multiple access wireless communications system. The uplink dedicated control channel is used to send Dedicated Control Reports (DCR) from wireless terminals to base stations. Vertical axis 602 plots logical uplink tone index while horizontal axis 604 plots the uplink index of the halfslot within a beaconslot. In this example, an uplink tone block includes 113 logical uplink tones indexed (0, ..., 112); there are seven successive OFDM symbol transmission time periods within a halfslot, 2 additional OFDM symbol time periods followed by 16 successive half-slots within a superslot, and 8 successive superslots within a beacon slot. The first 9 OFDM symbol transmission time periods within a superslot are an access interval, and the dedicated control channel does not use the air link resources of the access interval.

The exemplary dedicated control channel is subdivided into 31 logical tones (uplink tone index 81 606, uplink tone index 82 608, ... , uplink tone index 111 610). Each logical uplink tone (81, ..., 111) in the logical uplink frequency structure corresponds to a logical tone indexed with respect to the DCCH channel (0, ..., 30).

For each tone in the dedicated control channel there are 40 segments in the beaconslot corresponding to forty columns (612, 614, 616, 618, 620, 622, ..., 624). The segment structure repeats on a beaconslot basis. For a given tone in the dedicated control channel there are 40 segments corresponding to a beaconslot 628; each of the eight superslots of the beaconslot includes 5 successive segments for the given tone. For example, for first superslot 626 of beaconslot 628, corresponding to tone 0 of the DCCH, there are five indexed segments (segment [0][0], segment [0][1], segment [0][2], segment [0][3], segment [0][4]). Similarly, for first superslot 626 of beaconslot 628, corresponding to tone 1 of the DCCH, there are five indexed segments (segment [1][0], segment [1][1], segment [1][2], segment [1][3], segment [1][4]). Similarly, for first superslot 626 of beaconslot 628, corresponding to tone 30 of the DCCH, there are five indexed segments (segment [30][0], segment [30][1], segment [30][2], segment [30][3], segment [30][4]).

In this example each segment, e.g., segment [0][0], comprises one tone for 3 successive half-slots, e.g., representing an allocated uplink air link resource of 21 OFDM tone-symbols. In some embodiments, logical uplink tones are hopped to physical tones in accordance with an uplink tone hopping sequence such that the physical tone associated with a logical tone may be different for successive half-slots, but remains constant during a given half-slot.

Each logical tone of the dedicated control channel may be assigned by the base station to a different wireless terminal using the base station as its current point of attachment. For example, logical tone (606, 608, ... , 610) may be currently assigned to (WT A 630, WT B 632, ... , WT N' 634), respectively.

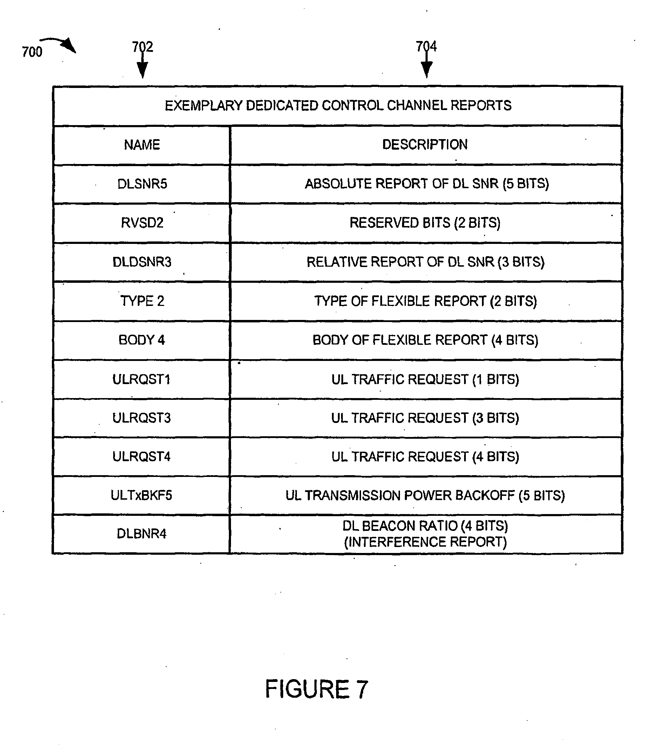

Each uplink DCCH segment is used to transmit a set of Dedicated Control Channel Reports (DCRs). A list of exemplary DCRs is given in table 700 of Figure 7. First column 702 of table 700 describes abbreviated names used for each exemplary report. The name of each report ends with a number which specifies the number of bits of the DCR. Second column 704 of table 700 briefly describes each named report.

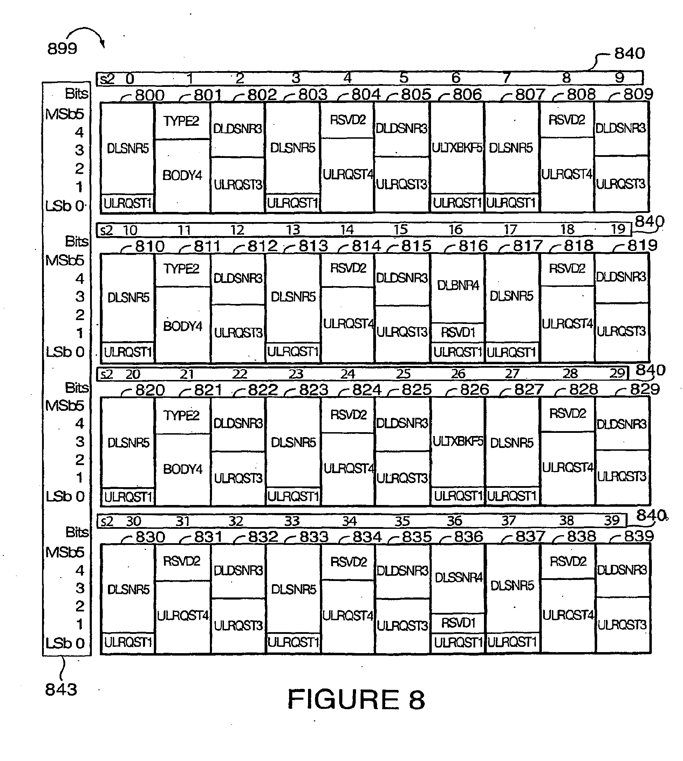

Figure 8 is a drawing 899 illustrating an exemplary reporting format information in an exemplary beaconslot for a given DCCH tone, e.g., corresponding to a wireless terminal. In Figure 8, each block (800, 801, 802, 803, 804, 805, 806, 807, 808, 809, 810, 811, 812, 813, 814, 815, 816, 817, 818, 819, 820, 821, 822, 823, 824, 825, 826, 827, 828, 829; 830, 831, 832, 833, 834, 835, 836, 837, 838, 839) represents one segment whose index s2 (0, ..., 39) is shown above the block in rectangular region 840. Each block, e.g., block 800 representing segment 0, conveys 6 information bits; each block comprises 6 rows corresponding to the 6 bits in the segment, where the bits are listed from the most significant bit to the least significant bit downwards from the top row to the bottom row as shown in rectangular region 843.

Figure 9 is a drawing 900 including a table 902 describing an exemplary format of exemplary 4 bit uplink traffic request report (ULRQST4) and a column 904 describing reporting alternatives. Column 906 of table 902 lists the 16 possible information bit patterns for the report, and column 908 lists reported backlog information conveyed corresponding to each of the possible bit patterns. For example, N[1] = 2 indicates that request group 1 has two frames in its backlog to be transmitted; N[2] = 4:5 indicates that request group 2 has 4 or 5 frames in its backlog to be transmitted; N[3]>=33 indicates that request group 3 has 33 or more frames in its backlog. Column 904 indicates that reporting alternative A reports that request groups 1, 2, and 3 have no backlog and corresponds to the bit pattern 0000. Column 904 also indicates that: reporting alternative B reports on request group 1 backlog and corresponds to bit patterns (0001, 0010 and 0011); reporting alternative C reports on request group 2 backlog and corresponds to bit patterns (0100, 0101, 0110 and 0111); and reporting alternative D reports on request group 3 backlog and corresponds to bit patterns (1000, 1001, 1010, 1011, 1100, 1101, 1110 and 0111).

Figure 10 is a drawing 1000 including a table 1002 describing another exemplary format of exemplary 4 bit uplink traffic request report (ULRQST4) and a column 1004 describing reporting alternatives. Column 1006 of table 1002 lists the 16 possible information bit patterns for the report, and column 1008 lists reported backlog information conveyed corresponding to each of the possible bit patterns. For example, N[1] = 0 indicates that request group 1 has no frames in its backlog to be transmitted; N[2] = 3:6 indicates that request group 2 has 3, 4, 5 or 6 frames in its backlog to be transmitted; N[3]>=33 indicates that request group 3 has 33 or more frames in its backlog. Column 1004 indicates that: reporting alternative A reports on request group 1 backlog and corresponds to bit patterns (0000, 0001, 0010 and 0011); reporting alternative B reports on request group 2 backlog and corresponds to bit patterns (0100, 0101, 0110 and 0111); and reporting alternative C reports on request group 3 backlog and corresponds to bit patterns (1000, 1001, 1010, 1011, 1100, 1101, 1110 and 0111).

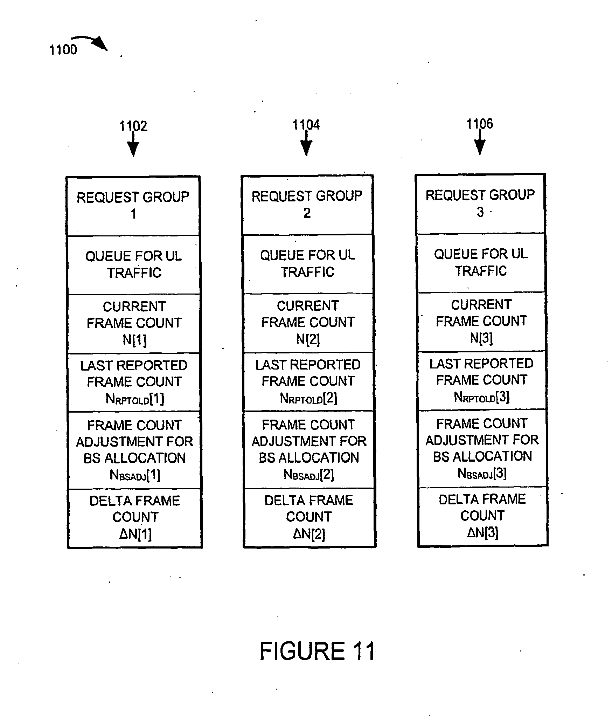

Figure 11 is a drawing 1100 describing three exemplary request groups in an exemplary wireless terminal. In some embodiments, the information of Figure 11 is includes as part of data/information 216 of wireless terminal 200. Column 1102 describes that request group 1 has a queue for uplink traffic, a current frame count N[1] of its queue, a last reported frame count N_{RPTOLD}[1], a frame count adjustment for base station allocation N_{BSADJ}[1] and a delta frame count ΔN[1]. The last reported frame count transmitted in a report corresponding to the request group, N_{RPTOLD}[1], may have been communicated in the same type of request report, e.g., the same bit size request report, or a different type of request report, e.g., a different bit size request report. The base station adjustment value N_{BSADJ}[1] may correspond to a previous assignment of an uplink traffic channel segment for conveying frames of request group 1 information. In some embodiments, ΔN[1]=(N[1]-N_{RPTOLD}[1])-N_{BSADJ}[1].

Column 1104 describes that request group 2 has a queue for uplink traffic, a current frame count N[2] of its queue, a last reported frame count N_{RPTOLD}[2], a frame count adjustment for base station allocation N_{BSADJ}[2] and a delta frame count ΔN[2]. Column 1106 describes that request group 3 has a queue for uplink traffic, a current frame count N[3] of its queue, a last reported frame count N_{RPTOLD}[3], a frame count adjustment for base station allocation N_{BSADJ}[3] and a delta frame count ΔN[3].

In some embodiments, the different request groups correspond to different types of traffic. For example, in one exemplary embodiment, request group 1 corresponds to control traffic, request group 2 corresponds to voice traffic, and request group 3 corresponds to data traffic. In another exemplary embodiment, request group 1 corresponds to voice traffic, request group 2 corresponds to other time sensitive traffic, e.g., gaming traffic, and request group 3 corresponds to relatively time insensitive traffic, e.g., traffic including data file transfer traffic.

While described in the context of an OFDM system, the methods and apparatus of various embodiments, are applicable to a wide range of communications systems including many non-OFDM and/or non-cellular systems.

In various embodiments nodes described herein are implemented using one or more modules to perform the steps corresponding to one or more methods, for example, transmission backlog management, request group selection, report generation, etc.. In some embodiments various features are implemented using modules. Such modules may be implemented using software, hardware or a combination of software and hardware. Many of the above described methods or method steps can be implemented using machine executable instructions, such as software, included in a machine readable medium such as a memory device, e.g., RAM, floppy disk, etc. to control a machine, e.g., general purpose computer with or without additional hardware, to implement all or portions of the above described methods, e.g., in one or more nodes. Accordingly, among other things, various embodiments are directed to a machine-readable medium including machine executable instructions for causing a machine, e.g., processor and associated hardware, to perform one or more of the steps of the above-described method(s).

Numerous additional variations on the methods and apparatus described above will be apparent to those skilled in the art in view of the above descriptions. Such variations are to be considered within scope. The methods and apparatus of various embodiments may be, and in various embodiments are, used with CDMA, orthogonal frequency division multiplexing (OFDM), and/or various other types of communications techniques which may be used to
provide wireless communications links between access nodes and mobile nodes. In some embodiments the access nodes are implemented as base stations which establish communications links with mobile nodes using OFDM and/or CDMA. In various embodiments the mobile nodes are implemented as notebook computers, personal data assistants (PDAs), or other portable devices including receiver/transmitter circuits and logic and/or routines, for implementing the methods of various embodiments.

## Claims

1. A method (400) of reporting transmission backlog information, the method comprising:
maintaining (404) backlog information corresponding to a plurality of different transmission request groups; wherein the plurality of different transmission request groups correspond to different queues or sets of queues which can be used to store information to be transmitted; and
selecting (406) a request group from the plurality of different transmission request groups for which backlog information is maintained, wherein said selecting is performed as a function of a request group change in backlog with respect to previously reported backlog information after taking into consideration changes in backlog due to base station allocation of transmission resources.

2. The method (400) of claim 1, wherein said selecting includes:
selecting, when at least one of the transmission request groups has a non-zero change in backlog with respect to the last previously reported request report conveying that particular request group's backlog information after taking into consideration changes in backlog due to base station allocation of transmission resources, the request group having the highest priority from among the request groups having a non-zero change in backlog with respect to the last previously reported request report conveying that particular request group's backlog information after taking into consideration changes in backlog due to base station allocation of transmission resources.

3. The method (400) of claim 1,
wherein said selected request group corresponds to one of a plurality of supported reporting alternatives of an n-bit size request report format, different reporting alternatives corresponding to different request groups; and generating (408) a n-bit size request report in accordance with said n-bit size request report format and said reporting alternative corresponding to the selected request group.

4. The method (400) of claim 3, further comprising:
transmitting (410) the generated n-bit size request report over a wireless communications link.

5. The method (400) of claim 1, wherein selecting a request group from the plurality of different transmission request groups for which backlog information is maintained, includes:
selecting, when none of the individual request groups have a non-zero change in backlog with respect to the last previously reported request report conveying that particular individual request group's backlog information after taking into consideration changes in backlog due to base station allocation of transmission resources, a request group from the plurality of request groups according to a round robin selection process.

6. The method (400) of claim 1, wherein selecting a request group from the plurality of different transmission request groups for which backlog information is maintained, includes:
selecting, when none of the individual request groups has a non-zero change in backlog with respect to the last previously reported request report conveying that particular individual request group's backlog information after taking into consideration changes in backlog due to base station allocation of transmission resources, a request group from the plurality of request groups according to a priority ordering selection process.

7. The method (400) of claim 1, further comprising:
updating (412) said maintained backlog information as a function of at least one of received information to be transmitted, dropped information and transmitted information.

8. The method (400) of claim 7, wherein each request group corresponds to a request group queue used to store information to be transmitted.

9. The method (400) of claim 1, wherein said selecting includes:
selecting, when at least one of the transmission request groups has a positive change in backlog with respect to the last previously reported request report conveying that particular request group's backlog information after taking into consideration changes in backlog due to base station allocation of transmission resources, the request group having the highest priority from among the request groups having a positive change in backlog with respect to the last previously reported request report conveying that particular request group's backlog information after taking into consideration changes in backlog due to base station allocation of transmission resources.

10. The method (400) of claim 1, wherein said selecting includes:
selecting, when at least one of the transmission request groups has a backlog and a non-negative change in backlog with respect to the last previously reported request report conveying that particular request group's backlog information after taking into consideration changes in backlog due to base station allocation of transmission resources, the request group having the highest priority from among the request groups having a backlog and a non-negative change in backlog with respect to the last previously reported request report conveying that particular request group's backlog information after taking into consideration changes in backlog due to base station allocation of transmission resources.

11. A wireless communications device (200), comprising:
means for maintaining (218) backlog information corresponding to a plurality of different transmission request groups; wherein the plurality of different transmission request groups correspond to different queues or sets of queues which can be used to store information to be transmitted; and
means for selecting (220) a request group from the plurality of different transmission request groups for which backlog information is maintained,
wherein said selecting is performed as a function of a request group change in backlog with respect to previously reported backlog information after taking into consideration changes in backlog due to base station allocation of transmission resources.

12. The wireless communications device (200) of claim 11, wherein said means for selecting (220) is adapted to
select, when at least one of the transmission request groups has a non-zero change in backlog with respect to the last previously reported request report conveying that particular request group's backlog information after taking into consideration changes in backlog due to base station allocation of transmission resources, the request group having the highest priority from among the request groups having a non-zero change in backlog with respect to the last previously reported request report conveying that particular request group's backlog information after taking into consideration changes in backlog due to base station allocation of transmission resources.

13. The wireless communications device (200) of claim 11, further comprising:
means for storing (236) n-bit size request report format information, said n-bit size request report format information supporting a plurality of reporting alternatives, different reporting alternatives corresponding to different request groups; and
means for generating (222) a n-bit size request report in accordance with said n-bit size request report format and said reporting alternative corresponding to the selected request group.

14. The wireless communications device (200) of claim 13, further comprising:
means for transmitting (204, 205, 224) the generated n-bit size request report over a wireless communications link.

15. The wireless communications device (200) of claim 11, wherein said means for selecting a request group includes means (232) for selecting a request group from the plurality of request groups according to a round robin selection process, when none of the individual request groups have a non-zero change in backlog with respect to the last previously reported request report conveying that particular individual request group's backlog information after taking into consideration changes in backlog due to base station allocation of transmission resources.

16. The wireless communications device (200) of claim 11, wherein said means for selecting a request group includes means (234) for selecting a request group from the plurality of request groups according to a priority ordering selection process when none of the individual request groups has a non-zero change in backlog with respect to the last previously reported request report conveying that particular individual request group's backlog information after taking into consideration changes in backlog due to base station allocation of transmission resources.

17. The wireless communications device (200) of claim 11, wherein the means for maintaining backlog information includes:
means for updating (226) the maintained backlog information as a function of at least one of received information to be transmitted, dropped information and transmitted information.

18. The wireless communications device (200) of claim 17, further including:
means for storing (216) a plurality of request group queues (240, 242) used to store information to be transmitted, each request group corresponding to a request group queue.

19. The wireless communications device (200) of claim 11, wherein said wireless communications device is a wireless terminal which is a hand held mobile communications device.

20. The wireless communications device (200) of claim 11 wherein:
the means (218) for maintaining backlog information corresponding to a plurality of different transmission request groups comprises a transmission backlog management module; and
the means (220) for selecting a request group from the plurality of different transmission request groups for which backlog information is maintained comprises a selection module.

21. The wireless communications device (200) of claim 20, wherein said means for selecting is adapted to
select, when at least one of the transmission request groups has a non-zero change in backlog with respect to the last previously reported request report conveying that particular request group's backlog information after taking into consideration changes in backlog due to base station allocation of transmission resources, the request group having the highest priority from among the request groups having a non-zero change in backlog with respect to the last previously reported request report conveying that particular request group's backlog information after taking into consideration changes in backlog due to base station allocation of transmission resources.

22. The wireless communications device (200) of claim 20, further comprising:
memory (236) including n-bit size request report format information, said n-bit size request report format information supporting a plurality of reporting alternatives, different reporting alternatives corresponding to different request groups; and
a report generation module (222) for generating a n-bit size request report in accordance with said n-bit size request report format and said reporting alternative corresponding to the selected request group.

23. The wireless communications device (200) of claim 22, further comprising:
a transmission module (224) for transmitting the generated n-bit size request report over a wireless communications link.

24. The wireless communications device (200) of claim 20, wherein said selection module includes a default selection module (230, 232) for selecting a request group from the plurality of request groups according to a round robin selection process, when none of the individual request groups have a non-zero change in backlog with respect to the last previously reported request report conveying that particular individual request group's backlog information after taking into consideration changes in backlog due to base station allocation of transmission resources.

25. The wireless communications device (200) of claim 20, wherein said selection module includes a default selection module (230, 234) for selecting a request group from the plurality of request groups according to a priority ordering selection process when none of the individual request groups has a non-zero change in backlog with respect to the last previously reported request report conveying that particular individual request group's backlog information after taking into consideration changes in backlog due to base station allocation of transmission resources.

26. The wireless communications device (200) of claim 20, wherein the transmission backlog management module includes:
a backlog update module (226) for updating the maintained backlog information as a function of at least one of received information to be transmitted,
dropped information and transmitted information.

27. The wireless communications device (200) of claim 26, further including:
a plurality of request group queues (240, 242) used to store information to be transmitted, each request group corresponding to a request group queue.

28. The wireless communications device (200) of claim 24, wherein said wireless communications device is a wireless terminal which is a hand held mobile communications device.

29. The wireless communications device (200) of claim 20, wherein said means for selecting is adapted to
select, when at least one of the transmission request groups has a positive change in backlog with respect to the last previously reported request report conveying that particular request group's backlog information after taking into consideration changes in backlog due to base station allocation of transmission resources, the request group having the highest priority from among the request groups having a positive change in backlog with respect to the last previously reported request report conveying that particular request group's backlog information after taking into consideration changes in backlog due to base station allocation of transmission resources.

30. The wireless communications device (200) of claim 20, wherein said means for selecting is adapted to
select, when at least one of the transmission request groups has a backlog and a non-negative change in backlog with respect to the last previously reported request report conveying that particular request group's backlog information after taking into consideration changes in backlog due to base station allocation of transmission resources, the request group having the highest priority from among the request groups having a backlog and a non-negative change in backlog with respect to the last previously reported request report conveying that particular request group's backlog information after taking into consideration changes in backlog due to base station allocation of transmission resources.

31. A computer readable medium embodying instructions for implementing a method according to any of claims 1 to 10.

## Patentansprüche

1. Ein Verfahren (400) zum Berichten von Übertragungsrückstandsinformation, wobei das Verfahren aufweist:
Bereithalten (404) von Rückstandsinformation, welche einer Mehrzahl von verschiedenen Übertragungsanforderungsgruppen entspricht; wobei die Mehrzahl der verschiedenen Übertragungsanforderungsgruppen verschiedenen Schlangen oder Mengen von Schlangen entsprechen, welche zu übertragende Information speichern können; und
Auswählen (406) einer Anforderungsgruppe von der Mehrzahl von verschiedenen Übertragungsanforderungsgruppen für welche Rückstandsinformation bereitgehalten wird, wobei das Auswählen durchgeführt wird als Funktion einer Anforderungsgruppenveränderung im Rückstand bezogen auf zuvor berichtete Rückstandsinformation nach Berücksichtigen von Veränderungen im Rückstand aufgrund von Basisstationszuweisung von Übertragungsresourcen.

2. Das Verfahren (400) nach Anspruch 1, wobei das Auswählen beinhaltet:
Auswählen der Anforderungsgruppe, welche die höchste Priorität unter den Anforderungsgruppen mit von null verschiedener Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen eine von null verschiedene Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen.

3. Das Verfahren (400) nach Anspruch 1,
wobei die ausgewählte Anforderungsgruppe einer von einer Mehrzahl von unterstützten Berichtsalternativen von einem Anforderungsberichtsformat mit n-Bit-Größe entspricht, wobei verschiedene Berichtslaternativen verschiedenen Anforderungsgruppen entsprechen; und
Erzeugen (408) eines Anforderungsberichts mit n-Bit-Größe in Übereinstimmung mit dem Anforderungsberichtsformat und der Berichtsalternative entsprechend der ausgewählten Anforderungsgruppe.

4. Das Verfahren (400) nach Anspruch 3, weiter aufweisend:
Übertragen (410) des erzeugten Anforderungsberichts mit n-Bit-Größe über eine drahtlose Kommunikationsverbindung.

5. Das Verfahren (400) nach Anspruch 1, wobei Auswählen einer Anforderungsgruppe von der Mehrzahl von verschiedenen Übertragungsanforderungsgruppen, für welche Rückstandsinformation bereitgehalten wird, beinhaltet:
Auswählen, wenn keine der individuellen Anforderungsgruppen eine von null verschiedene Veränderung im Rückstand bezogen auf den letzten zuvor berichteten Anforderungsbericht aufweist,
welcher die Rückstandsinformation dieser individuellen Anforderungsgruppe übermittelt nach Berücksichtigen von Veränderungen im Rückstand aufgrund von Basisstationszuweisung von Übertragungsresourcen, einer Anforderungsgruppe von der Mehrzahl von Anforderungsgruppen gemäß eines Round-Robin-Auswahlprozesses.

6. Das Verfahren (400) nach Anspruch 1, wobei Auswählen einer Anforderungsgruppe von der Mehrzahl von verschiedenen Übertragungsanforderungsgruppen, für welche Rückstandsinformation bereitgehalten wird, beinhaltet:
Auswählen, wenn keine der individuellen Anforderungsgruppen eine von null verschiedene Veränderung im Rückstand bezogen auf den letzten zuvor berichteten Anforderungsbericht aufweist,
welcher die Rückstandsinformation dieser individuellen Anforderungsgruppe übermittelt nach Berücksichtigen von Veränderungen im Rückstand aufgrund von Basisstationszuweisung von Übertragungsresourcen, einer Anforderungsgruppe von der Mehrzahl von Anforderungsgruppen gemäß eines Auswahlprozesses mit Prioritätsordnung.

7. Das Verfahren (400) nach Anspruch 1, weiter aufweisend:
Aktualisieren (412) der bereitgehaltenen Rückstandsinformation als einer Funktion von zumindest einem aus der Gruppe von einer zu übertragenden empfangenen Information, einer fallengelassenen Information und einer übertragenen Information.

8. Das Verfahren (400) nach Anspruch 7, wobei jede Anforderungsgruppe einer Anforderungsgruppenschlange entspricht, welche verwendet wird, um zu übertragende Information zu speichern.

9. Das Verfahren (400) nach Anspruch 1, wobei das Auswählen beinhaltet:
Auswählen der Anforderungsgruppe, welche die höchste Priorität unter den Anforderungsgruppen mit positiver Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen eine positive Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen.

10. Das Verfahren (400) nach Anspruch 1, wobei das Auswählen beinhaltet:
Auswählen, wenn zumindest eine der Übertragungsanforderungsgruppen einen Rückstand und eine nicht-negative Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wobei die Anforderungsgruppe die höchst Priorität aufweist unter den Anforderungsgruppen, welche einen Rückstand und eine nicht-negative Veränderung im Rückstand bezogen auf den letzten zuvor berichteten Anforderungsbericht aufweisen, welcher den Rückstand dieser Anforderungsgruppe übermittelt nach Berücksichtigen von Veränderungen im Rückstand aufgrund von Basisstationszuweisung von Übertragungsresourcen.

11. Ein drahtloses Kommunikationsgerät (200), aufweisend:
Mittel zum Bereithalten (218) von Rückstandsinformation,
welche einer Mehrzahl von verschiedenen Übertragungsanforderungsgruppen entspricht; wobei die Mehrzahl der verschiedenen Übertragungsanforderungsgruppen verschiedenen Schlangen oder Mengen von Schlangen entspricht,
welche zu übertragende Information speichern können; und
Mittel zum Auswählen (220) einer Anforderungsgruppe von der Mehrzahl von verschiedenen Übertragungsanforderungsgruppen für welche Rückstandsinformation bereitgehalten wird, wobei das Auswählen durchgeführt wird als Funktion einer Anforderungsgruppenveränderung im Rückstand bezogen auf zuvor berichtete Rückstandsinformation nach Berücksichtigen von Veränderungen im Rückstand aufgrund von Basisstationszuweisung von Übertragungsresourcen.

12. Das drahtlose Kommunikationsgerät (200) nach Anspruch 11, wobei das Mittel zum Auswählen (220) geeignet ist, die Anforderungsgruppe auszuwählen, welche die höchste Priorität unter den Anforderungsgruppen mit von null verschiedener Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen eine von null verschiedene Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationzuweisung von Übertragungsresourcen.

13. Das drahtlose Kommunikationsgerät (200) nach Anspruch 11, weiter aufweisend:
Mittel zum Speichern (236) von
Anforderungsberichtsformatinformation mit n-Bit-Größe, wobei die Anforderungsberichtsformatinformation mit n-Bit-Größe eine Mehrzahl von Berichtsalternativen unterstützt und
verschiedene Berichtsalternativen verschiedenen Anforderungsgruppen entsprechen; und
Mittel zum Erzeugen (222) eines Anforderungsberichts mit n-Bit-Größe in Übereinstimmung mit dem
Anforderungsberichtsformat mit n-Bit-Größe und der Berichtsalternative, welche der ausgewählten Anforderungsgruppe entspricht.

14. Das drahtlose Kommunikationsgerät (200) nach Anspruch 13, weiter aufweisend:
Mittel zum Übertragen (204, 205, 224) des erzeugten Anforderungsberichts mit n-Bit-Größe über eine drahtlose Kommunikationsverbindung.

15. Das drahtlose Kommunikationsgerät (200) nach Anspruch 11, wobei das Mittel zum Auswählen einer Anforderungsgruppe Mittel (232) zum Auswählen einer Anforderungsgruppe aus der Mehrzahl von Anforderungsgruppen beinhaltet gemäß eines Round-Robin-Auswahlprozesses, wenn keine der individuellen Anforderungsgruppen eine von null verschiedene Veränderung im Rückstand bezogen auf den letzten zuvor berichteten Anforderungsbericht aufweist, welcher die Rückstandsinformation dieser individuellen Anforderungsgruppe übermittelt nach Berücksichtigen von Veränderungen im Rückstand aufgrund von Basisstationzuweisung von Übertragungsresourcen.

16. Das drahtlose Kommunikationsgerät (200) nach Anspruch 11, wobei das Mittel zum Auswählen einer Anforderungsgruppe Mittel (234) zum Auswählen einer Anforderungsgruppe aus der Mehrzahl von Anforderungsgruppen beinhaltet gemäß einem Auswahlprozess mit Prioritätsordnung, wenn keine der individuellen Anforderungsgruppen eine von null verschiedene Veränderung im Rückstand bezogen auf den letzten zuvor berichteten Anforderungsbericht aufweist, welcher die Rückstandsinformation dieser individuellen Anforderungsgruppe übermittelt nach Berücksichtigen von Veränderungen im Rückstand aufgrund von Basisstationszuweisung von Übertragungsresourcen.

17. Das drahtlose Kommunikationsgerät (200) nach Anspruch 11, wobei das Mittel zum Bereithalten der Rückstandsinformation beinhaltet:
Mittel zum Aktualisieren (226) der bereitgehaltenen Rückstandsinformation als einer Funktion von zumindest einem aus der Gruppe von einer zu übertragenden empfangenen Information, einer fallengelassenen Information und einer übertragenen Information.

18. Das drahtlose Kommunikationsgerät (200) nach Anspruch 17, weiter aufweisend:
Mittel zum Speichern (216) einer Mehrzahl von Anforderungsgruppenschlangen (240, 242), welche verwendet werden, um zu übertragende Information zu speichern, wobei jede Anforderungsgruppe einer Anforderungsgruppenschlange entspricht.

19. Das drahtlose Kommunikationsgerät (200) nach Anspruch 11, wobei das drahtlose Kommunikationsgerät ein drahtloses Endgerät ist, welches ein tragbares mobiles Kommunikationsgerät ist.

20. Das drahtlose Kommunikationsgerät (200) nach Anspruch 11, wobei:
das Mittel (218) zum Bereithalten von Rückstandsinformation entsprechend einer Mehrzahl von verschiedenen Übertragungsanforderungsgruppen ein Übertragungsrückstandsmanagementmodul aufweist; und
das Mittel (220) zum Auswählen einer Anforderungsgruppe von der Mehrzahl von verschiedenen
Übertragungsanforderungsgruppen für welche Rückstandsinformation bereitgehalten wird, ein Auswahlmodul aufweist.

21. Das drahtlose Kommunikationsgerät (200) nach Anspruch 20, wobei das Mittel zum Auswählen geeignet ist, die Anforderungsgruppe auszuwählen, welche die höchste Priorität unter den Anforderungsgruppen mit von null verschiedener Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen eine von null verschiedene Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen.

22. Das drahtlose Kommunikationsgerät (200) nach Anspruch 20, weiter aufweisend:
Speicher (236), welcher Anforderungsberichtsformatinformation mit n-Bit-Größe beinhaltet, wobei die
Anforderungsberichtsformatinformation mit n-Bit-Größe eine Mehrzahl von Berichtsalternativen unterstützt, wobei verschiedene Berichtsalternativen verschiedenen Anforderungsgruppen entsprechen; und
ein Berichtserzeugungmodul (222) zum Erzeugen eines Anforderungsberichts mit n-Bit-Größe in Übereinstimmung mit dem Anforderungsberichtsformat mit n-Bit-Größe und der Berichtsalternative entsprechend der ausgewählten Berichtsgruppe.

23. Das drahtlose Kommunikationsgerät (200) nach Anspruch 22, weiter aufweisend:
ein Übertragungsmodul (224) zum Übertragen des erzeugten Anforderungsberichts mit n-Bit-Größe über eine drahtlose Kommunikationsverbindung.

24. Das drahtlose Kommunikationsgerät (200) nach Anspruch 20, wobei das Auswahlmodul ein Vorgabe-Auswahlmodul (230, 232) zum Auswählen einer Anforderungsgruppe aus einer Mehrzahl von Anforderungsgruppen beinhaltet gemäß eines Round-Robin-Auswahlprozesses, wenn keine der individuellen Anforderungsgruppen eine von null verschiedene Veränderung im Rückstand bezogen auf den letzten zuvor berichteten Anforderungsbericht aufweist, welcher die Rückstandsinformation dieser individuellen Anforderungsgruppe übermittelt nach Berücksichtigen von Veränderungen im Rückstand aufgrund von Basisstationzuweisung von Übertragungsresourcen.

25. Das drahtlose Kommunikationsgerät (200) nach Anspruch 20, wobei das Auswahlmodul ein Vorgabe-Auswahlmodul (230, 234) beinhaltet zum Auswählen einer Anforderungsgruppe von der Mehrzahl von Anforderungsgruppen gemäß einem Auswahlprozess mit Prioritätsordnung, wenn keine der individuellen Anforderungsgruppen eine von null verschiedene Veränderung im Rückstand bezogen auf den letzten zuvor berichteten Anforderungsbericht aufweist, welcher die Rückstandsinformation dieser individuellen Anforderungsgruppe übermittelt nach Berücksichtigen von Veränderungen im Rückstand aufgrund von Basisstationszuweisung von Übertragungsresourcen.

26. Das drahtlose Kommunikationsgerät (200) nach Anspruch 20, wobei das Übertragungsrückstandsmanagementmodul beinhaltet:
ein Rückstandsaktualisierungsmodul (226) zum Aktualisieren der bereitgehaltenen Rückstandsinformation als einer Funktion von zumindest einem aus der Gruppe von einer zu übertragenden empfangenen Information, einer fallengelassenen Information und einer übertragenen Information.

27. Das drahtlose Kommunikationsgerät (200) nach Anspruch 26, weiter beinhaltend:
eine Mehrzahl von Anforderungsgruppenschlangen (240, 242),
welche verwendet werden, um zu übertragende Information zu speichern, wobei jede Anforderungsgruppe einer Anforderungsgruppenschlange entspricht.

28. Das drahtlose Kommunikationsgerät (200) nach Anspruch 24, wobei das drahtlose Kommunikationsgerät ein drahtloses Endgerät ist, welches ein tragbares mobiles Kommunikationsgerät ist.

29. Das drahtlose Kommunikationsgerät (200) nach Anspruch 20, wobei das Mittel zum Auswählen geeignet ist, die Anforderungsgruppe auszuwählen, welche die höchste Priorität unter den Anforderungsgruppen mit positiver Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen eine positive Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen.

30. Das drahtlose Kommunikationsgerät (200) nach Anspruch 20, wobei das Mittel zum Auswählen geeignet ist, die Anforderungsgruppe mit der höchsten Priorität unter den Anforderungsgruppen auszuwählen, welche einen Rückstand aufweisen und eine nicht-negative Veränderung im Rückstand bezogen auf den letzten zuvor berichteten Anforderungsbericht, welcher den Rückstand dieser Anforderungsgruppe übermittelt nach Berücksichtigen von Veränderungen im Rückstand aufgrund von Basisstationszuweisung von Übertragungsresourcen, wenn zumindest eine der Übertragungsanforderungsgruppen einen Rückstand und eine nicht-negative Veränderung im Rückstand bezogen auf den letzten zuvor berichteten Anforderungsbericht aufweist, welcher die Rückstandsinformation dieser Anforderungsgruppe übermittelt nach Berücksichtigen von Veränderungen im Rückstand aufgrund von Basisstationszuweisung von Übertragungsresourcen.

31. Ein computer-lesbares Medium mit Anweisungen zur Implementierung eines Verfahrens gemäß einem der Ansprüche 1 bis 10.

## Revendications

1. Procédé (400) consistant à rapporter des informations d'arriéré de transmission, le procédé comportant les étapes consistant à :
conserver (404) des informations d'arriéré correspondant à une pluralité de différents groupes de demandes de transmission, dans lequel la pluralité de différents groupes de demandes de transmission correspondent à différentes files d'attente ou ensembles de files d'attente qui peuvent être utilisés pour mémoriser des informations à transmettre, et
sélectionner (406) un groupe de demandes parmi la pluralité de différents groupes de demandes de transmission pour lesquels des informations d'arriéré sont conservées, dans lequel ladite sélection est exécutée en fonction d'un changement de groupe de demandes d'arriéré par rapport à des informations d'arriéré rapportées précédemment après avoir pris en compte des changements d'arriéré dus à l'attribution de ressources de transmission à une station de base.

2. Procédé (400) selon la revendication 1, dans lequel ladite sélection inclut l'étape consistant à :
sélectionner, lorsqu'au moins l'un des groupes de demandes de transmission a un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

3. Procédé (400) selon la revendication 1,
dans lequel ledit groupe de demandes sélectionné correspond à l'une d'une pluralité d'alternatives de rapport supportées d'un format de rapport de demande d'une taille de n bits, différentes alternatives de rapport correspondant à différents groupes de demandes, et
la génération (408) d'un rapport de demande d'une taille de n bits conformément audit format de rapport de demande d'une taille de n bits et ladite alternative de rapport correspondant au groupe de demandes sélectionné.

4. Procédé (400) selon la revendication 3, comportant en outre l'étape consistant à :
transmettre (410) le rapport de demande d'une taille de n bits généré sur une liaison de communication sans fil.

5. Procédé (400) selon la revendication 1, dans lequel la sélection d'un groupe de demandes parmi la pluralité de différents groupes de demandes de transmission pour lesquels des informations d'arriéré sont conservées, inclut :
de sélectionner, lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base, un groupe de demandes parmi la pluralité de groupes de demandes conformément un processus de sélection du chacun son tour.

6. Procédé (400) selon la revendication 1, dans lequel la sélection d'un groupe de demandes parmi la pluralité de différents groupes de demandes transmission pour lesquels des informations d'arriéré sont conservées, inclut :
de sélectionner, lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base, un groupe de demandes parmi la pluralité de groupes de demandes conformément à un processus de sélection par ordre de priorité.

7. Procédé (400) selon la revendication 1, comportant en outre l'étape consistant à :
mettre à jour (412) lesdites informations d'arriéré en conservées en fonction d'au moins l'une des informations reçues à transmettre, des informations supprimées et des informations transmises.

8. Procédé (400) selon la revendication 7, dans lequel chaque groupe de demandes correspond à une file d'attente de groupes de demandes utilisée pour mémoriser des informations à transmettre.

9. Procédé (400) selon la revendication 1, dans lequel ladite sélection inclut l'étape consistant à :
sélectionner, lorsqu'au moins l'un des groupes de demandes de transmission a un changement positif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un changement positif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

10. Procédé (400) selon la revendication 1, dans lequel ladite sélection inclut l'étape consistant à :
sélectionner lorsqu'au moins l'un des groupes de demandes transmission a un arriéré et un changement non négatif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un retard et un changement non négatif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

11. Dispositif de communication sans fil (200), comportant :
des moyens pour conserver (218) des informations d'arriéré correspondant à une pluralité de différents groupes de demandes de transmission, dans lequel la pluralité de différents groupes de demandes de transmission correspondent à différentes files d'attente ou ensembles de files d'attente qui peuvent être utilisés pour mémoriser des informations à transmettre, et
des moyens pour sélectionner (220) un groupe de demandes parmi la pluralité de différents groupes de demandes de transmission pour lesquels des informations d'arriéré sont conservées, dans lequel ladite sélection est exécutée en fonction d'un changement de groupe de demandes d'arriéré par rapport aux informations d'arriéré rapportées précédemment après avoir pris en compte des changements d'arriéré dus à l'attribution de ressources de transmission à une station de base.

12. Dispositif de communication sans fil (200) selon la revendication 11, dans lequel lesdits moyens de sélection (220) sont adaptés pour :
sélectionner, lorsqu'au moins l'un des groupes de demandes de transmission a un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

13. Dispositif de communication sans fil (200) selon la revendication 11, comportant en outre :
des moyens pour mémoriser (236) des informations format de rapport de demande d'une taille de n bits, lesdites informations de format de rapport de demande d'une taille de n bits supportant une pluralité d'alternatives de rapport, différentes alternatives de rapport correspondant à différents groupes de demandes, et
des moyens pour générer (408) un rapport de demande d'une taille de n bits conformément audit format de rapport de demande d'une taille de n bits et ladite alternative de rapport correspondant au groupe de demandes sélectionné.

14. Procédé de communication sans fil (200) selon la revendication 13, comportant en outre :
des moyens pour transmettre (204, 205, 224) le rapport de demande d'une taille de n bits sur une liaison de communication sans fil.

15. Dispositif de communication sans fil (200) selon la revendication 11, dans lequel lesdits moyens pour sélectionner un groupe de demandes incluent des moyens (232) pour sélectionner un groupe de demandes parmi la pluralité de groupes de demandes conformément à un processus de sélection du chacun son tour, lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base.

16. Dispositif de communication sans fil (200) selon la revendication 11, dans lequel lesdits moyens pour sélectionner un groupe de demandes incluent des moyens (232) pour sélectionner un groupe de demandes parmi la pluralité de groupes de demandes conformément à un processus de sélection par ordre de priorité lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base.

17. Dispositif de communication sans fil (200) selon la revendication 11, dans lequel les moyens pour conserver des informations d'arriéré incluent :
des moyens pour mettre à jour (226) les informations d'arriéré conservées en fonction d'au moins l'une des informations reçues à transmettre, des informations supprimées et des informations transmises.

18. Dispositif de communication sans fil (200) selon la revendication 17, incluant en outre :
des moyens pour mémoriser (216) une pluralité de files d'attente de groupes de demandes (240, 242) utilisées pour mémoriser des informations à transmettre, chaque groupe de demandes correspondant à une file d'attente de groupes de demandes.

19. Dispositif de communication sans fil (200) selon la revendication 11, dans lequel ledit dispositif de communication sans fil est un terminal sans fil qui est un dispositif de communication mobile portable.

20. Dispositif de communication sans fil (200) selon la revendication 11, dans lequel :
les moyens (218) pour conserver des informations d'arriéré correspondant à une pluralité de différents groupes de demandes de transmission comportent un module de gestion d'arriéré de transmission, et
les moyens (220) pour sélectionner un groupe de demandes parmi la pluralité de différents groupes de demandes de transmission pour lesquels des informations d'arriéré sont conservées comportent un module de sélection.

21. Dispositif de communication sans fil (200) selon la revendication 20, dans lequel lesdits moyens de sélection sont adaptés pour
sélectionner, lorsqu'au moins l'un des groupes de demandes de transmission a un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

22. Dispositif de communication sans fil (200) selon la revendication 20, comportant en outre :
une mémoire (236) incluant des informations de format de rapport de demande d'une taille de n bits, lesdites informations de format de rapport de demande d'une taille de n bits supportant une pluralité d'alternatives de rapport, différentes alternatives de rapport correspondant à différents groupes de demandes, et
un module de génération de rapport (222) pour générer un rapport de demande d'une taille de n bits conformément audit format de rapport de demande d'une taille de n bits et ladite alternative de rapport correspondant au groupe de demandes sélectionné.

23. Procédé de communication sans fil (200) selon la revendication 13, comportant en outre :
un module de transmission (224) pour transmettre le rapport de demande d'une taille de n bits sur une liaison de communication sans fil.

24. Dispositif de communication sans fil (200) selon la revendication 20, dans lequel ledit module de sélection inclut un module de sélection par défaut (230, 232) pour sélectionner un groupe de demandes parmi la pluralité de groupes de demandes conformément à un processus de sélection du chacun son tour, lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base.

25. Dispositif de communication sans fil (200) selon la revendication 20, dans lequel ledit module de sélection inclut un module de sélection par défaut (230, 234) pour sélectionner un groupe de demandes parmi la pluralité de groupes de demandes conformément à un processus de sélection par ordre de priorité lorsqu'aucun des groupes de demandes individuelles n'a de changement non nul d'arriéré par rapport au dernier rapport de demande rapporté précédemment acheminant ces informations d'arriéré de groupe de demandes individuelles particulier après avoir pris en compte des changements d'arriéré dus à l'attribution de ressources de transmission à une station de base.

26. Dispositif de communication sans fil (200) selon la revendication 20, dans lequel le module de gestion d'arriéré de transmission inclut :
un module de mise à jour d'arriéré (226) pour mettre à jour des informations d'arriéré conservées en fonction d'au moins l'une des informations reçues à transmettre, des informations supprimées et des informations transmises.

27. Dispositif de communication sans fil (200) selon la revendication 26, incluant en outre :
une pluralité de files d'attente de groupes de demandes (240, 242) utilisées pour mémoriser des informations à transmettre, chaque groupe de demandes correspondant à une file d'attente de groupes de demandes.

28. Dispositif de communication sans fil (200) selon la revendication 24, dans lequel ledit dispositif de communication sans fil est un terminal sans fil qui est un dispositif de communication mobile portable.

29. Dispositif de communication sans fil (200) selon la revendication 20, dans lequel lesdits moyens de sélection sont adaptés pour :
sélectionner, lorsqu'au moins l'un des groupes de demandes de transmission a un changement positif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un changement positif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

30. Dispositif de communication sans fil (200) selon la revendication 20, dans lequel lesdits moyens de sélection sont adaptés pour :
sélectionner, lorsqu'au moins l'un des groupes de demandes de transmission a un arriéré et un changement non nul d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base, le groupe de demandes ayant la priorité la plus élevée parmi les groupes de demandes ayant un arriéré et un changement non négatif d'arriéré par rapport au dernier rapport de demande rapporté précédemment acheminant ces informations d'arriéré de groupe de demandes particulier après avoir pris en compte des changements d'arriéré dus à l'attribution de ressources de transmission à une station de base.

31. Support lisible par ordinateur exécutant des instructions pour mettre en oeuvre un procédé selon l'une quelconque des revendications 1 à 10.
